# EUROPEAN PATENT APPLICATION

(11) **EP 4 195 126 A1**
(43) Date of publication of application: **14.06.2023**
(21) Application number: 22211545.3
(22) Date of filing: 06.12.2022
(51) Int. Cl.: G06Q 10/087

(54) **APPARATUSES, COMPUTER-IMPLEMENTED METHODS, AND COMPUTER PROGRAM PRODUCTS FOR PARALLEL WIRELESS SCANNING**

(30) Priority: 07.12.2021 IN 202111056793
(71) Applicant: Intermec, Inc., Lynwood, WA 98087 (US)
(72) Inventor: BISWAS, Gourango Lal, Charlotte, 28202 (US); PANDEY, Pankaj Kumar, Charlotte, 28202 (US); SURESH, Sandeep, Charlotte, 28202 (US)
(74) Representative: Haseltine Lake Kempner LLP

(57) **Abstract**

Embodiments are generally directed to wireless parallel scanning apparatus(es) and process(es) with reduced time to identify a location associated with a data identifier from a plurality of possible locations. Embodiments perform and process the results of various wireless (e.g., RFID) scans via antenna chains, the wireless scans performed in parallel and scan data representing the results of the wireless scans received in parallel. Some embodiments include a single multi-core processor, the multi-core processor including multiple cores that each independently (1) activate a wireless scanning chain including a transceiver communicable with a switch, the switch associated with controlling a signal transmitted to one of a plurality of antenna chains, and (2) receive scan data received via the wireless scanning chain. Some embodiments include the single multi-core processor including a core that aggregates the scan data from other cores and identifies a location identifier for a target data identifier.

## Description

### TECHNICAL FIELD

Embodiments of the present disclosure generally relate to apparatuses and methodologies for improved wireless scanning, and specifically to improved apparatuses and methodologies for improved detection of data identifier(s) and identification of location identifier(s) corresponding to such data identifier(s) utilizing a parallel scanning process.

### BACKGROUND

In various contexts, identifying where a particular object is located is desirable. In some contexts, wireless scanning is utilized to attempt to identify where a particular object is located. For example, in some contexts, wireless scans are initiated that leverage antennas to attempt to pinpoint where the particular object is located without requiring a user to manually search for the object.

Applicant has discovered problems with current implementations for wirelessly scanning for location(s) of object(s) in an environment. Through applied effort, ingenuity, and innovation, Applicant has solved many of these identified problems by developing embodied in the present disclosure, which are described in detail below.

### BRIEF SUMMARY

In accordance with a first aspect of the disclosure, a computer-implemented method is provided for performing a parallel scanning process to identify a location identifier for a target data identifier. The computer-implemented method is executable by one or more computing device(s) embodied in hardware, software, firmware, and/or a combination thereof, as described herein. In some example embodiments, an example computer-implemented method includes initiating a first transceiver associated with a first plurality of antenna chains. The example computer-implemented method further includes activating, utilizing the first transceiver, the first plurality of antenna chains. The example computer-implemented method further includes initiating a second transceiver associated with a second plurality of antenna chains. The example computer-implemented method further includes activating, utilizing the second transceiver, the second plurality of antenna chains. The example computer-implemented method further includes in parallel receiving a plurality of scan data including first scan data associated with a first plurality of locations, the first scan data received via the first plurality of antenna chains, and second scan data associated with a second plurality of locations, the second scan data received via the second plurality of antenna chains. The example computer-implemented method further includes determining, from the plurality of scan data, a location identifier associated with a target data identifier, the location identifier based at least in part on an antenna that detected the target data identifier.

Additionally or alternatively, in some embodiments of the example computer-implemented method, the example computer-implemented method further includes activating a location environmental indicator associated with the location identifier where the target data identifier is located.

Additionally or alternatively, in some embodiments of the example computer-implemented method, the computer-implemented method includes receiving the first scan data at a first core of a multi-core processor and receiving the second scan data at a second core of the multi-core processor, and the computer-implemented method further includes determining, utilizing the first core, whether the first scan data includes the target data identifier; and determining, utilizing the second core, whether the second scan data includes the target data identifier.

Additionally or alternatively, in some embodiments of the example computer-implemented method, the location identifier is determined from a sub-portion of the plurality of scan data, the sub-portion corresponding to a particular antenna of the first plurality of antenna chains or the second plurality of antenna chains, where the location identifier corresponds to a location of the particular antenna.

Additionally or alternatively, in some embodiments of the example computer-implemented method, the example computer-implemented method further includes initiating at least one additional transceiver, each additional transceiver associated with an additional plurality of antenna chains; and activating the additional plurality of antenna chains, where the plurality of scan data further includes additional scan data associated with at least one additional plurality of locations, the additional scan data received via the additional plurality of antenna chains.

Additionally or alternatively, in some embodiments of the example computer-implemented method, activating, utilizing the first transceiver, the first plurality of antenna chains includes activating, utilizing the first transceiver, a first antenna chain of the first plurality of antenna chains, the first antenna chain activated based at least in part on a sequence of non-overlapping Frequency channels.

Additionally or alternatively, in some embodiments of the example computer-implemented method, activating, utilizing the first transceiver, the first plurality of antenna chains includes activating, utilizing the first transceiver, a first antenna chain of the first plurality of antenna chains, the first antenna chain activated based at least in part on a plurality of distinct reference clocks.

Additionally or alternatively, in some embodiments of the example computer-implemented method, each antenna chain includes a plurality of antennas, each antenna corresponding to a different location identifiers associated with a sub-portion of an environment.

Additionally or alternatively, in some embodiments of the example computer-implemented method, the example computer-implemented method further includes receiving a scan trigger signal, where the first transceiver and the second transceiver are initiated in response to receiving the scan trigger signal.

Additionally or alternatively, in some embodiments of the example computer-implemented method, the example computer-implemented method further includes identifying a next target travel point from delivery path data including a plurality of target travel points; and determining at least one target data identifier linked to the next target travel point, the at least one target data identifier including the target data identifier.

In accordance with a second aspect of the present disclosure, an apparatus is provided for performing a parallel scanning process to identify a location identifier for a target data identifier. In some example embodiments, an example apparatus includes at least one processor and at least one memory having computer-coded instructions stored thereon. The computer-coded instructions in execution with the at least one processor cause the apparatus to perform any one of the example computer-implemented methods described herein. In some other example embodiments, an example apparatus includes means for performing each step of any one of the computer-implemented methods described herein.

In accordance with a third aspect of the present disclosure, a non-transitory computer-readable storage medium is provided for performing a parallel scanning process to identify a location identifier for a target data identifier. The non-transitory computer-readable storage medium embodies a computer program product configured for execution by at least one processor. In some example embodiments, an example non-transitory computer-readable storage medium stores instructions (e.g., computer-coded instructions embodying computer program code) stored thereon that, in execution with at least one processor, configures the at least one processor to perform any one of the example computer-implemented methods described herein.

In accordance with a fourth aspect of the present disclosure, an improved wireless parallel scanning apparatus is provided for performing a parallel scanning process to identify a location identifier for at least one target data identifier. In some example embodiments, the example improved wireless parallel scanning apparatus includes a plurality of transceivers, each transceiver communicatively coupled with a plurality of antenna chains. The example improved wireless parallel scanning apparatus further includes a plurality of switches, each transceiver communicable with a switch of the plurality of switches that controls switching between the plurality of antenna chains communicatively coupled with the transceiver. The example improved wireless parallel scanning apparatus further includes a processor including a plurality of cores, each core communicatively coupled with a transceiver of the plurality of transceivers. The processor of the example improved wireless parallel scanning apparatus is configured by computer-coded instructions to receive, in parallel via the plurality of cores, a plurality of scan data, the plurality of scan data including scan data from at least one antenna chain communicatively coupled with each transceiver of the plurality of transceivers. The processor of the example improved wireless parallel scanning apparatus is further configured by computer-coded instructions to determine, from the plurality of scan data, a location identifier associated with a target data identifier.

In some example embodiments of the example improved wireless parallel scanning apparatus , the example improved wireless parallel scanning apparatus further includes a primary process core that performs the receiving of the plurality of scan data and the extracting of the location identifier.

In some example embodiments of the example improved wireless parallel scanning apparatus , the example improved wireless parallel scanning apparatus a plurality of microprocessors, the plurality of microprocessors including a microprocessor associated with each transceiver. Each microprocessor is configured to activate a particular transceiver associated with the microprocessor to generate, from the particular transceiver, a signal for activating at least one antenna of a particular plurality of antenna chains associated with the transceiver; configure a particular switch associated with the particular transceiver to activate each antenna chain of the plurality of antenna chains associated with the particular switch; receive, via the particular transceiver, particular scan data associated with the plurality of antenna chains; and transmit the particular scan data to a particular core of the processor, where the processor aggregates the particular scan data from each microprocessor to receive the plurality of scan data.

In some example embodiments of the example improved wireless parallel scanning apparatus , the example improved wireless parallel scanning apparatus is communicatively coupled with a plurality of location environmental indicators, and the wireless parallel scanning apparatus is configured to activate a location environmental indicator based at least in part on the location identifier.

In some example embodiments of the example improved wireless parallel scanning apparatus, the example improved wireless parallel scanning apparatus each antenna chain includes a plurality of antennas, each antenna corresponding to a different location identifiers associated with a sub-portion of an environment.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a system that performs a parallel scanning process for one or more target data identifier(s) in accordance with at least some embodiments of the present disclosure.
FIG. 2 illustrates an example parallel scanning apparatus in accordance with at least some embodiments of the present disclosure.
FIG. 3 illustrates an example multi-core processor specially configured for performing a parallel scanning process in accordance with at least some embodiments of the present disclosure.
FIG. 4 illustrates an example delivery vehicle environment configured for performing a parallel scanning process in accordance with at least some embodiments of the present disclosure.
FIG. 5 illustrates a visualization of an example path including multiple target travel points in accordance with at least some embodiments of the present disclosure.
FIG. 6 illustrates an example data repository structure in accordance with at least some embodiments of the present disclosure.
FIG. 7 illustrates a flowchart including operations of an example process for performing parallel scanning process(es) in accordance with at least some embodiments of the present disclosure.
FIG. 8 illustrates a flowchart including operations of an example process for performing another parallel scanning process(es) in accordance with at least some embodiments of the present disclosure.
FIG. 9 illustrates a flowchart including operations of an example process for initiating a parallel scanning process in accordance with at least some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

### DEFINITIONS

"Active antenna chain" refers to an antenna chain of a plurality of antenna chains to which data is currently being output and/or from which data is currently being received from. In some embodiments, a switch communicatively coupled with a plurality of antenna chains receives a control signal that sets the active antenna chain. In some embodiments, an activate antenna chain includes a particular "active antenna" that is set to a first mode that causes the antenna to emit energy based on received signal(s), and the remaining antenna(s) in the antenna chain or at least before the active antenna is/are set to a second mode that causes the remaining antennas to propagate received signal(s) to a next antenna in the antenna chain.

"Antenna" refers to circuitry embodied in hardware, software, and/or firmware that radiates signal wave(s) embodying electrical signal(s) at a particular frequency or frequencies, and/or intercept(s) signal wave(s) to generate corresponding electrical signal(s) at a particular frequency or frequencies. Non-limiting examples of an antenna include a wire antenna, aperture antenna, a patch antenna (e.g., with circular polarization), and array antenna, that generates radio signal wave(s). In some embodiments, an antenna is settable to one of a plurality of operational mode(s) utilizing a switch, where the switch toggles between at least a first mode that causes the antenna to emit signal waves based on received signal(s) (e.g., power and/or data signal(s)), and a second mode that causes the particular antenna to propagate received signal(s) to a next antenna within the antenna chain and with which the particular antenna is coupled.

"Antenna chain" refers to a sequence of antennas organized in a daisy-chain arrangement. In some embodiments, an antenna chain enables passing of power signal(s) and/or data signal(s) to each antenna in the sequence. In some embodiments, an antenna chain includes a daisy chain of antennas, where each of the antennas is settable to at least a first mode for generating signal wave(s) based on received input signal(s), and a second mode for propagating signal wave(s) based on received input signal(s).

"Antenna identifier data" refers to electronically managed data that uniquely identifies a particular antenna. Non-limiting examples of antenna identifier data includes a device identifier, a unique identifier assigned to an antenna, and location services information that indicate an absolute or relative position of an antenna within an environment.

"Frequency channel" with respect to an antenna refers to a frequency range over which signal waves(s) are produced and/or received by the antenna.

"Communicatively coupled" refers to a state of wireless or wired connectivity between device(s), circuitry, and/or other computing components.

"Core" refers to a discrete processing unit of a central processing unit embodied in hardware, software, firmware, and/or a combination thereof. The processing unit is configured to read and/or write computer-coded instructions and/or data for processing by the processing unit.

"Data identifier" refers to electronically managed data that identifies a particular wirelessly-detectable element. In some embodiments, a data identifier is stored on the wirelessly-detectable element to enable detection of the data identifier via wireless scanning.

"Data-tagged object" refers to any object, item, package, or other physical element including or that has a wirelessly-enabled element attached.

"Delivery path data" refers to electronically managed data representing a sequence of travel points, the sequence of travel points embodying a path along which an entity may travel.

"Display information" refers to electronically managed data to be rendered via a user interface and/or utilized to configure a user interface for rendering.

"Environment" refers to a physical area including one or more locations where data-tagged object(s) may be located.

"In parallel" refers to two or more processes that each have at least one step performed overlapping in time. In some embodiments, processes performed in parallel await completion of one or more step(s) in the other process(es) to continue.

"Location" refers to a particular portion of an environment where an object may be located.

"Location identifier" refers to electronically managed data uniquely identifying a location of an environment.

"Location environmental indicator" refers to physical component that is activatable to indicate a particular location corresponding to a location identifier to a user. Non-limiting examples of a location environmental indicator includes an activatable light or other visual indicator within an environment, an activatable speaker or other audio indicator within the environment, and/or another device that, upon activation, indicates to a user a location within an environment.

"Multi-core processor" refers to processing circuitry embodied in hardware, software, firmware, and/or a combination thereof that includes a plurality of discrete cores. Each core in a multi-core processor operates independently, and in some embodiments is communicable with at least one other core of the multi-core processor. In some embodiments, each core of a multi-core processor embodies an independent processor.

"Next target travel point" refers to a travel point at a subsequent index in a sequence of travel points, where the subsequent index follows a current index along a path embodied by the sequence of sequential travel points.

"Parallel scanning process" refers to a process that wirelessly scans for one or more data identifier(s) over the air utilizing two or more antenna chains operating in parallel, and processes scan data received via the two or more antenna chains.

"Plurality of antenna chains" refers to two or more antenna chains that are each controlled at least in part by shared computing hardware. Some embodiments activate a particular antenna chain of a plurality of antenna chains via a single switch that controls the active antenna chain of the plurality of antenna chains.

"Plurality of locations" refers to two or more locations. In some contexts, a plurality of locations is describable by a higher-order identifier that represents a shared classification of each location in the plurality of locations. Non-limiting examples of a plurality of locations defined by a higher-order identifier include multiple locations along a top row of shelving units defined by "top," multiple locations along a middle row of shelving units defined by "middle," and multiple locations along a bottom row of shelving units defined by "bottom."

"Primary process core" refers to a core of a multi-core processor that is specially configured to control and/or communicate with one or more other sub-cores of the multi-core processor to perform a parallel scanning process utilizing the one or more sub-cores operating in parallel with one another. In some embodiments, a primary process core is embodied by specially configured hardware, software, firmware, and/or a combination thereof.

"Reference clock" refers to hardware, software, firmware, and/or a combination thereof that controls timing for operation of an antenna and/or one or more component(s) controlling the antenna.

"Wireless scanning chain" refers to hardware, software, firmware, and/or a combination thereof including a plurality of antenna chains and/or component(s) controlling operation of the plurality of antenna chains. In some embodiments, an wireless scanning chain includes a plurality of antenna chains communicatively coupled with a switch that sets an active antenna chain, the switch communicatively coupled with a transceiver and/or microprocessor that controls data input and/or output, and at least one processor or core of a multi-core processor that initiates data output and/or receives data input.

"Scan data" refers to electronically managed data received via at least one antenna, where the data indicates zero or more data identifier(s) detected via the at least one antenna. In some embodiments, scan data includes a portion of data identifying the antenna that received the corresponding data indicating zero or more data identifier(s).

"Scan trigger signal" refers to an electronic data signal that causes initiation of one or more process(es) for scanning for data identifier(s) utilizing one or more antenna chain(s).

"Sequence of non-overlapping Frequency channels" refers to a plurality of unique frequency ranges.

"Signal for activating" refers to an electronic data signal that causes activation of one or more computing device(s) or component(s). In some embodiments, a signal for activating specially configures one or more setting(s) utilized by the one or more computing device(s) or component(s).

"Switch" refers to circuitry embodied in hardware, software, and/or firmware that receives a control signal and based at least in part on the control signal provides data input and/or data output functionality to a particular connection of a plurality of possible connections.

"Target data identifier" refers to a particular data identifier for which a location is to be identified. In some contexts, a target data identifier corresponds to a data-tagged object to be identified and/or interacted with by a user in an environment.

"Target travel point" refers to a particular position, coordinate, and/or other geographic designator to which an entity is to stop.

"Transceiver" refers to circuitry embodied in hardware, software, firmware, and/or a combination thereof, that facilitates receiving and/or transmitting of particular signal waves. In some embodiments, a transceiver receives and/or transmits radio wave(s) over a particular frequency band.

"Wireless scanning chain" and "scanning chain" refers to discrete components communicatively coupled with each other to perform a scanning process in parallel with one or more other wireless scanning chain(s). In some embodiments, a wireless scanning chain includes at least one antenna chain (or a plurality of antenna chains), a transceiver and microcontroller or other control units for activating an antenna chain, and a core for activating, controlling, and/or receiving data from via the active antenna chain. In some embodiments, a wireless scanning chain includes additional component(s) that switch between a plurality of antenna chains, boost signal(s) for transmission to and/or between antennas of an antenna chain, and/or activate a particular antenna of an active antenna chain.

"Inventory cycle process" refers to a computer-implemented process to identify location(s) associated with one or more data-tagged object(s). An inventory cycle process is repeatable any number of times as desired with the same and/or different parameters(s) that define the data-tagged object(s) to be identified.

### OVERVIEW

In various contexts, wireless scanning is utilized to identify particular object(s), identify locations of object(s), and/or the like. For example, in various contexts, detectable elements, such as wireless data tags, smart labels, and/or other detectable elements, are applied to various objects in an environment. These detectable elements are scannable by one or more wireless mechanism(s), such as by utilizing RFID scanning and/or wireless detection means that utilize any of a myriad of wireless communication protocol(s) (e.g., Bluetooth, Bluetooth low energy, 4G wireless transmission, 5G wireless transmission, NFC, and/or the like).

In some contexts, such wireless scanning is performed to detect particular data elements within an environment for any of a myriad of use cases. In some such contexts, objects are each tagged with a wirelessly-detectable element, such as an RFID tag or smart label, that enables a corresponding wireless system (e.g., a wireless parallel scanning apparatus embodying an improved RFID reader and plurality of antenna chains) to detect the presence or the location of the detectable element for object(s) within a particular portion of the environment. For example, in certain contexts, wireless scanning utilizing RFID or other wireless detection mechanisms are performed to detect the location and/or presence of a particular object within an environment based on the results of such wireless scanning. One such context includes locating object(s) for offloading, moving, and/or otherwise interacting with by a user within a warehouse environment, a delivery vehicle environment, or the like. In some such contexts, wireless scanning-based detection provides an indication of the presence of a particular object or a location for the particular object. In this regard, a user can utilize such knowledge to reduce the time utilized to retrieve the object from within the environment.

In some contexts, the wireless scanning process is utilized for particular use cases that are time-sensitive. For example, in one example, context wireless scanning such as RFID scanning is usable to detect the location of object(s) to be delivered at various stops along a delivery path. In such contexts, the wireless scanning process should be completed before arrival at a particular stop to enable a user (e.g., a driver of the delivery vehicle) to use the location of an object to retrieve that object. In some such circumstances, objects within the environment (e.g., the delivery vehicle) shift during transit and/or are shifted by the user during delivery at various stops. In this regard, the wireless scanning process is to be performed between each stop to identify a current location for each object to be delivered at the next stop. In some such contexts, such as when the time between delivery stops is relatively small (e.g., less than three minutes) such a wireless scanning process embodying an inventory cycle process may not complete before arrival at the next stop along the delivery path. In such circumstances, the user (e.g., the delivery vehicle driver) must wait for the wireless scanning process to complete and provide output to utilize the output as an aid for identifying and/or interacting with particular object(s). Alternatively, the user may attempt to identify the object(s) to be delivered at the particular location without aid by the wireless scanning process. Such circumstances increase the likelihood of a mistake (e.g., the user selecting an inaccurate object not to be delivered at the current stop), or delays the user by forcing the user to wait for completion of the process. Accordingly, the inventors have identified that decreasing the execution time of wireless scanning processes that identify a location of an object within an environment (e.g., using RFID) is desirable.

Embodiments of the present disclosure provide for improved wireless scanning process(es), such as for identifying a location of a particular data identifier corresponding to a detectable element of an object. Some embodiments include specially configured computing device(s), such as RFID readers, that utilize a parallel scanning process. The parallel scanning process utilizes a plurality of transceivers, each transceiver associated with a plurality of antenna chains, that perform parallel scanning process. Additionally, some embodiments include a specially configured multi-core processor that utilizes each core of a plurality of cores to initiate and receive scan data from a particular transceiver, and utilizes a core to process the scan data from the plurality of cores.

Embodiments of the present disclosure provide various technical advantages to technical fields. Some embodiments utilize transceivers that are each associated with a plurality of antenna chains to, in parallel, both perform and store scan data utilizing an active antenna chain associated with each transceiver. Additionally or alternatively, some embodiments utilize a specially-configured multi-core processor that, in parallel, receives and stores the scan data for each transceiver during operation of the parallel scanning process and enables processing of the plurality of scan data from each core with improved efficiency. Additionally, some embodiments determine a location identifier for a target data identifier (or a plurality of target data identifiers) upon completion of the parallel scanning process utilizing the plurality of transceivers and plurality of antenna chains associated therewith. Such embodiments reduce the total time to determine the location identifier associated with a target data identifier by executing a parallel scanning process. Additionally or alternatively, some embodiments activate and/or otherwise initialize a location environmental indicator that visually indicates a location represented by the location identifier, and additionally or alternatively some embodiments activate the location environmental indicator in less time from initiation of the parallel scanning process.

In the particular context of object delivery via a delivery vehicle, embodiments provide particular additional advantages. For example, embodiments of the present disclosure reduce the total time to determine a location identifier associated with a particular data identifier, allowing the location identifier to be utilized in further processes in less time. In some such contexts, embodiments of the present disclosure enable output and/or activation of location environmental indicator(s) for use by a user (e.g., a delivery vehicle driver) in reduced time for locating particular object(s) to be delivered, selected, and/or otherwise interacted with at a particular target travel point. Additionally or alternatively, in some such contexts, the parallel scanning process is performable in a shorter length of time between target travel points along a path, allowing the resulting determined location identifiers to be utilized for delivering, selecting, and/or otherwise interacting with particular object(s) in the environment with reduced likelihood that the user is required to wait for completion of a conventional, longer process or risk user error resulting from operating without such location identifier(s). It will be appreciated that such operational advantages with respect to execution time are always advantageous, but provide specific advantages in this delivery context as any delay further wastes resources further causes additional delay, risk (as the delivery vehicle must remain in place and exposed to other vehicles), and the like.

### EXAMPLE SYSTEMS AND APPARATUSES OF THE DISCLOSURE

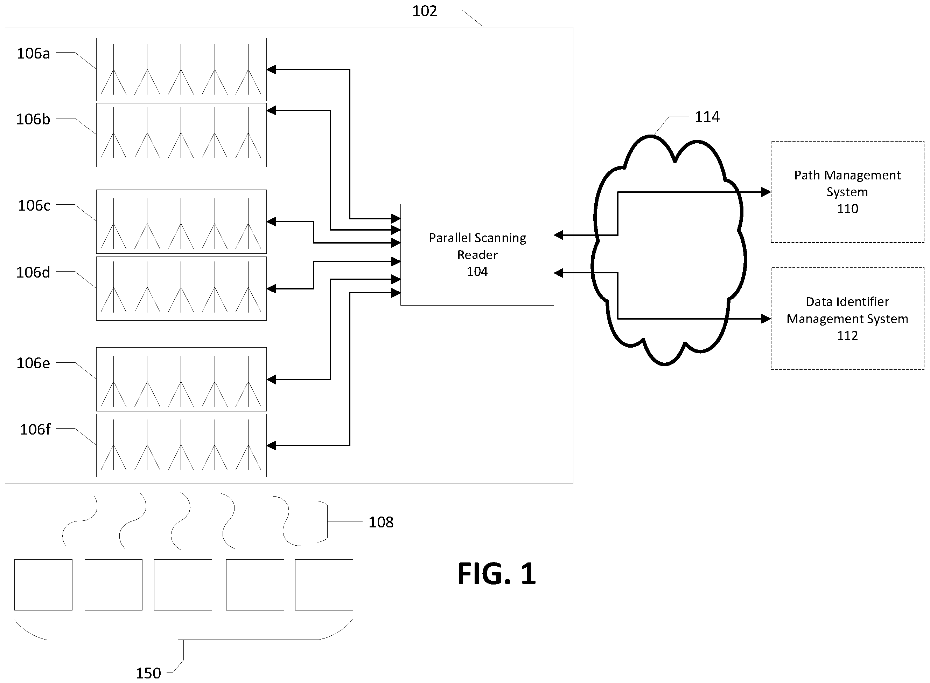

FIG. 1 illustrates a system that performs a parallel scanning process for one or more target data identifier(s) in accordance with at least some embodiments of the present disclosure. Specifically, FIG. 1 depicts an parallel scanning system 102 that includes a parallel scanning reader 104 in communication with a plurality of antenna chains 106a-106f. The parallel scanning system 102 is configured utilizing particular hardware, software, firmware, and/or a combination thereof, to perform a parallel scanning process for detecting one or more target data identifier(s) and/or location identifier(s) associated therewith within a particular environment. The parallel scanning system 102 is optionally in communication with a path management system 110 and/or a data identifier management system 112. In some embodiments, the parallel scanning system 102 communicates with the path management system 110 and/or the data identifier management system 112 over one or more communications network(s), for example embodied by the communications network 114. It will be appreciated that while the parallel scanning system 102 is depicted and described with respect to RFID scanning, in some other embodiments the parallel scanning system 102 instead implements another radio or short-range communication protocol. Non-limiting examples of such communication protocol(s) include RFID, Bluetooth, Bluetooth low energy, 4G wireless communication, 5G wireless communication, Near-Field Communications (NFC), and/or the like.

In some embodiments, the parallel scanning reader 104 includes a plurality of computing components that are embodied in hardware, software, firmware, and/or a combination thereof and configured to perform a parallel scanning process. For example, in some embodiments, the parallel scanning reader 104 includes a plurality of wireless scanning chain(s) that are each communicatively coupled with a single multi-core processor to enable scanning of one or more location(s) within a particular environment utilizing multiple of the antenna chains 106a-106f for parallel capture and/or processing of scan data. In this regard, each wireless scanning chain in some embodiments includes at least one transceiver communicatively coupled with a switch, each switch communicatively coupled with a plurality of antenna chains. Each wireless scanning chain is configured to perform scanning to detect particular scan data within location(s) of an environment utilizing the plurality of antenna chains in parallel with other wireless scanning chains. Particular example configurations and example operation of example parallel scanning systems, and/or parallel scanning reader(s) and antenna chains thereof, are described further herein.

In some embodiments, each antenna chain of the plurality of antenna chains is associated with a plurality of locations, each location associated with a different location identifier. For example, each antenna within the antenna chain 106a in some embodiments is activated to emit signal waves within a particular defined area, the area corresponding to a particular location. In one such example context, each antenna emits signal waves directed towards at a particular shelf or shelves of an environment where data-tagged objects are stored. In this example context, for example, each object is "tagged" or otherwise has attached or associated with the object an RFID tag corresponding to a particular data identifier for that object, where the emitted signal waves activate and/or otherwise "read" the data tag. In some embodiments, an antenna chain includes antennas associated with a shared high-level descriptor of the location scanned by each of the antennas in the antenna chain. In one example context, for example, the antenna chain 106a includes a plurality of antennas that are each positioned within an environment including a plurality of shelving units upon which data-tagged objects (e.g., RFID-tagged or smart labeled) are positioned for storage, transport, delivery, and/or the like. In one specific example context, the environment includes six shelving units, with three shelving units on a left side of the environment and vertically stacked (e.g., top-left shelf, middle-left shelf, and bottom-left shelf) and three shelving units on a right side of the environment and vertically stacked (e.g., top-right shelf, middle-right shelf, and bottom-right shelf). In such an example context, for example in one example embodiment, the antenna chain 106a includes a plurality of antennas located at different locations that scan along the top-left shelf of the environment, and the antenna chain 106a in some such embodiments is associated with a name label or other data that indicates that the antenna chain 106a is associated with the top-left shelf of the environment. Similarly, the antenna chain 106b in some such embodiments includes a plurality of antennas located at different locations that scan along the top-right shelf of the environment, and the antenna chain 106b in some such embodiments is associated with a name label or other data that indicates that the antenna chain 106b is associated with the top-right shelf of the environment. It will be appreciated that in this example context antenna chains 106c and 106d may correspond to the middle-left and middle-right shelves of the environment accordingly, and finally antenna chains 106e and 106f may correspond to the bottom-left and bottom-right shelves of the environment accordingly. In this regard, all locations along the multiple shelving units in the environment are detectable by at least one antenna in the plurality of antenna chains 106a-106f. In one example context, the environment includes a left rack and a right rack, each with five shelving units along which object(s) may be positioned and antennas associated with such locations may similarly be positioned above and/or below the shelving locations.

The parallel scanning system 102 in some embodiments utilizes the parallel scanning reader 104 and plurality of antenna chains 106a-106f to generate signal waves (e.g., radio waves) for scanning for a particular data identifier and/or plurality of data identifiers. For example, in some embodiments, the parallel scanning system 102 utilizes some of the plurality of antenna chains generates signal waves 108 for scanning a plurality of locations in an environment in parallel, and receives a plurality of portions of scan data (e.g., a plurality of scan data) in response. The scan data in some embodiments includes data identifier(s) corresponding to the data-tagged objects in the environment, such as the data-tagged objects 150. In this regard, each data-tagged object 150 in some embodiments includes an RFID tag, smart label, other wirelessly-detectable element, and/or the like that interacts with the signal waves 108 and produces data or otherwise indicates via one or more of the antenna(s) of the plurality of antenna chains 106a-106f that a data identifier corresponding to the data-tagged object is present. For example, in some embodiments, each data-tagged object is associated with a wirelessly-detectable smart label that encodes a data identifier embodying a unique identifier for the object and/or information associated therewith. In this regard, in some embodiments one or more antennas of a particular antenna chain generates one or more signal wave(s) of the signal waves 108 that activates the smart label and generates response signal waves that represent the data identifier of that smart label. Such antenna(s) then receive the response signal waves embodying the data identifier as part of the scan data received in response to initial generation of the signal waves 108. It will be appreciated that in some embodiments, any of a myriad of known RFID scanning protocol(s) may be used to encode information generated by wirelessly-detectable components on an object (e.g., a smart label, RFID tag, or the like), and/or enable communication between an antenna of the plurality of antenna chains 106a-106f and the wirelessly-detectable components, including active RFID transmission and/or passive RFID transmission implementations in the context of RFID transmissions.

In some embodiments, the system includes the optional data identifier management system 112. In some embodiments, the data identifier management system 112 includes one or more computing device(s) embodied in hardware, software, firmware, and/or a combination thereof, that manages data identifier(s) associated with one or more object(s), and/or object information associated therewith. In some embodiments, the data identifier management system 112 includes one or more server(s) and/or one or more data repositories communicatively coupled to perform data identifier management functionality. The data identifier management system 112 includes one or more local computing device(s), remote computing device(s), cloud computing device(s), and/or the like communicable over one or more local connection(s) and/or wide-range communications network(s).

In some embodiments, the system includes the optional path management system 110. In some embodiments, the path management system 110 includes one or more computing device(s) embodied in hardware, software, firmware, and/or a combination thereof, that manages data representation(s) of path(s) for delivering and/or otherwise transporting one or more object(s). In some embodiments, the path management system 110 includes one or more server(s) and/or one or more data repositories communicatively coupled to perform path management functionality. The path management system 110 includes one or more local computing device(s), remote computing device(s), cloud computing device(s), and/or the like communicable over one or more local connection(s) and/or wide-range communications network(s).

In some embodiments, the path management system 110 stores data representing path(s) corresponding to one or more delivery vehicle(s), where each path indicates positions along which a delivery vehicle is to stop and deliver one or more object(s). For example, in some embodiments, the path management system 110 stores delivery path data, each delivery path data representing a particular path for a delivery vehicle. In some embodiments, delivery path data includes a sequence of target travel points along which a particular delivery vehicle is to travel. In some such embodiments, path management system 110 stores delivery path data linked with an environment identifier representing a delivery vehicle indicating that the delivery vehicle is to travel along the path represented by the delivery path data to deliver one or more object(s) at target travel points in the delivery path data.

In some embodiments, the data identifier management system 112 determines or identifies a plurality of data identifiers corresponding to a plurality of objects within a particular environment. Additionally or alternatively, in some embodiments the data identifier management system 112 includes data linking each data identifier with a particular travel point (e.g., an address, coordinate, or other position) where the object corresponding to the data identifier is to be placed, delivered, and/or the like. Additionally or alternatively, in some embodiments, the data identifier management system 112 include object information embodying data value(s) for various object parameter(s), characteristic(s), and/or the like. In some embodiments, the data identifier management system 112 embodies an inventory management system associated with a delivery vehicle and/or package loading environment.

In some embodiments, the parallel scanning system 102 communicates with one or more of the path management system 110 and/or data identifier management system 112 over the communications network 114. The communications network 114 may embody any of a myriad of network configurations. In some embodiments, the communications network 114 embodies a public network (e.g., the Internet) in whole or in part. In some embodiments, the communications network 114 embodies a private network (e.g., an internal network between particular computing devices) in whole or in part. In some other embodiments, the communications network 114 embodies a hybrid network (e.g., a network enabling internal communications between particular connected computing devices and external communications with other computing devices). The communications network 114 in some embodiments includes one or more base station(s), relay(s), router(s), network switch(es), cell tower(s), communications cable(s) and/or associated routing station(s), and/or the like. In some embodiments, the communications network 114 includes one or more user entity-controlled computing device(s) and/or other enterprise device(s) (e.g., an end-user's or enterprise router, modem, network switch, and/or other network access point). Additionally or alternatively, in some embodiments the communications network 114 includes one or more external utility device(s) (e.g., Internet service provider communication tower(s) and/or other device(s)).

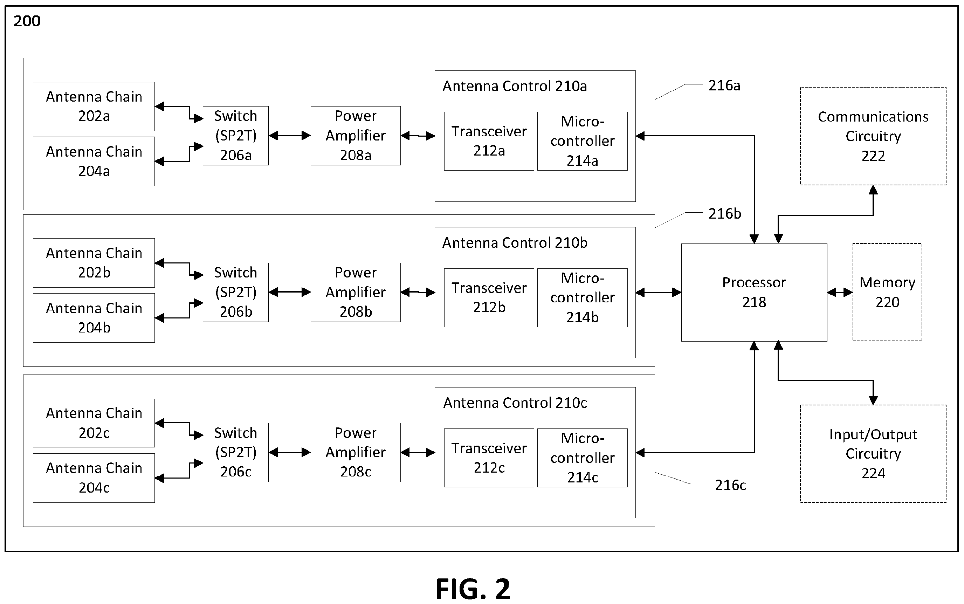

FIG. 2 illustrates an example parallel scanning apparatus in accordance with at least some embodiments of the present disclosure. In some embodiments, an RFID or other close-range wireless reader, such as the parallel scanning system 102, is embodied by one or more computing devices such as the parallel scanning apparatus 200 as depicted and described in FIG. 2. The parallel scanning apparatus 200 includes a processor 218, a memory 220, communications circuitry 222, input/output circuitry 224, and a plurality of wireless scanning chains 216a-216c configured to operate in parallel. In some embodiments, the parallel scanning apparatus 200 is configured, using one or more of the specially configured sets of circuitry embodying the processor 218, the memory 220, the communications circuitry 222, the input/output circuitry 224, and/or the plurality of wireless scanning chains 216a-216c, to execute the operations described herein.

Although components are described with respect to functional limitations, it should be understood that the particular implementations necessarily include the user of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the parallel scanning apparatus 200 provide or supplement the functionality of another particular set of circuitry. For example, the processor 218 in some embodiments provides processing functionality to any of the other sets of circuitry, the memory 220 provides storage functionality to any of other the sets of circuitry, the communication communications circuitry 222 provides network interface functionality to any of the other sets of circuitry, and/or the like.

In some embodiments, the processor 218 (and/or co-processor or any other processing circuitry assisting or otherwise associated with the processor) is/are in communication with the memory 220, input/output circuitry 224, communications circuitry 222, and/or wireless scanning chains 216 via one or more bus(es), serial peripheral interface(s), and/or the like for passing information among components of the parallel scanning apparatus 200. In some embodiments, for example the memory 220 is non-transitory and includes, for example, one or more volatile and/or non-volatile memories. In other words, for example, the memory 220 in some embodiments includes or embodies an electronic storage device (e.g., a computer readable storage medium). In some embodiments, the memory 220 is configured to store information, data (including scan data), content, applications, instructions, and/or the like, for enabling the parallel scanning apparatus 200 to carry out the various functionality described in accordance with example embodiments of the present disclosure.

In various embodiments, the processor 218 is embodied in any number of different ways. In some embodiments, the processor 218 includes one or more processing devices configured to perform independently. For example, in some embodiments, the processor 218 embodies a multi-core processor including a plurality of individually configurable cores. In this regard, in some embodiments one or more core(s) is/are each configured for controlling a particular wireless scanning chain of the wireless scanning chains 216a-216c to perform a particular scanning process in parallel with one or more other cores controlling one or more other wireless scanning chains 216a-216c. Additionally or alternatively, the processor 218 includes one or more core(s) that is/are configured to initiate the particular scanning process(es) by other cores of the processor 218 and/or process scan data received across other cores of the processor 218. In some other embodiments for example the processor 218 includes a plurality of linked discrete sub-processors functioning as individually configurable cores. Additionally or alternatively, in some embodiments, the processor 218 includes one or more processor(s) configured in tandem via a bus to enable independent execution of instructions, pipelining, and/or multi-threading. The use of the terms "processor" and "processing circuitry" should be understood to include linked single-core processor(s), one or more multi-core processor(s) internal or remote to the parallel scanning apparatus 200.

In some embodiments, the parallel scanning apparatus 200 includes input/output circuitry 224 that provides output to the user and, in some embodiments, receives indication(s) of user input. In some embodiments, the input/output circuitry 224 is in communication with the processor 218 to provide such functionality. The input/output circuitry 224 in some embodiments comprises one or more user interface(s), and/or in some embodiment includes a display that comprises the interface(s) rendered as an application user interface, command-line interface, a web user interface, a client device, a peripheral, a backend system, and/or the like. In some embodiments, the input/output circuitry 224 also includes a keyboard, a mouse, a joystick, a touch screen, touch areas, soft keys, a microphone, a speaker, or other input/output mechanisms. In some embodiments, the processor 218 and/or the input/output circuitry 224 including a processor, in some embodiments is configured to control one or more functions of one or more user interface elements through computer program instructions (e.g., software and/or firmware) stored on a memory accessible to such circuitry (e.g., the memory 220 and/or the like).

The communications circuitry 222 includes any means, including in some embodiments a device or circuitry embodied in hardware, software, firmware, and/or any combination thereof, that is configured to receive and/or transmit data to and/or from the parallel scanning apparatus 200. In some embodiments, the communications circuitry 222 includes hardware, software, firmware, and/or any combination thereof, that interfaces with a communication network and/or other computing device(s), circuitry, module(s), and/or the like in communication with the parallel scanning apparatus 200. In this regard, the communications circuitry 222 includes a network interface for enabling communications via one or more wired and/or wireless communications network(s). Additionally or alternatively, in some embodiments, the communications circuitry 222 includes one or more network interface card(s), antenna(s), bus(es), network switch(es), router(s), modem(s), and/or supporting hardware, firmware, software, and/or any other device suitable for enabling such communications. Additionally or alternatively, in some embodiments, the communications circuitry 222 includes circuitry for interacting with one or more short-range and/or long-range antenna(s) responsible for performing such communication, where the short-range and/or long-range antenna(s) are separate from the antennas of the plurality of antenna chains 216a-216c. Additionally or alternatively, in some embodiments, the communications circuitry 222 includes circuitry for interacting with such short-range and/or long-range antennas, and/or other hardware or software to cause transmission of signals via the antenna(s) and/or handle receipt of signals received via the antenna(s). In some embodiments, the communications circuitry 222 enables transmission to and/or receipt of data from one or more external system(s), where such data is utilized in performing particular parallel scanning process functionality as described herein. For example, in some embodiments, the communications circuitry 222 enables communication with a path management system and/or data identifier management system, for example as embodied by path management system 110 and/or data identifier management system 112 as depicted and described with respect to FIG. 1. In some embodiments, the communications circuitry 222 includes an Ethernet-enabled networking interface connecting the parallel scanning apparatus 200 with one or more other device(s) and/or component(s). Alternatively or additionally, in some embodiments, the communications circuitry 222 includes one or more Wi-Fi enabled networking interface(s).

In some embodiments, one or more component(s) provide communications capabilities in addition to one or more other services. For example, in some embodiments, the communications circuitry 222 includes power over ethernet (PoE) circuitry that provides communication capabilities as well as power between the various sub-component(s) and/or system(s) of the parallel scanning apparatus 200. In this regard, some such PoE implementations leverage a single connection to provide both power and data transfer capabilities. It will be appreciated that in some embodiments other circuitry provides both power and data transfer capabilities between components.

In some embodiments, the processor 218 controls activation and/or data flow with each wireless scanning chain 216a-216c. In this regard, in some embodiments the processor 218 controls each wireless scanning chain 216a-216c to perform a parallel scanning process based on the results of scan data received via the plurality of wireless scanning chains 216a-216c operating in parallel, as depicted and described herein.

In some embodiments, each wireless scanning chain includes a plurality of subcomponents that enable operation of a scanning process for detecting and/or identifying location(s) of particular data identifier(s) corresponding to particular object(s) within an environment. For example, in some embodiments, each wireless scanning chain is activated to generate one or more signal waves, and in response receives scan data representing data identifier(s) for object(s) detected at a particular location in the environment. In some such embodiments, each wireless scanning chain corresponds to a particular core of the processor 218, such that the corresponding core control(s) the wireless scanning chain linked to that particular core, and/or such that the corresponding core manages scan data received via the wireless scanning chain linked to that particular core.

The wireless scanning chain 216a, for example as illustrated, includes an antenna control 210a. In some embodiments, the antenna control 210a includes one or more device(s), component(s), circuitry, and/or the like that enable outputting of particular signal wave(s) over a particular wireless transmission protocol (e.g., RFID), and/or enables receiving scan data indicating a response to the particularly output signal wave(s). As illustrated, the antenna control 210a includes a transceiver 212a and a microcontroller 214a. In some embodiments, the transceiver 212a embodies an RFID transceiver that provides radio signal wave transmission and/or reception functionality. For example, in some embodiments, the transceiver 212a provides transmission and/or reception of radio signal waves at a particular frequency and/or within particular frequency band (e.g., a frequency channel). In some embodiments, the microcontroller 214a is specially configured to enable operation of the transceiver 212a, and/or process control of the data received thereby. It will be appreciated that, in other embodiments, the antenna control 210a includes any of a myriad of other circuitry, component(s), and/or the like that enable radio wave generation and/or receiving (e.g., capture) and processing.

In some embodiments, the transceiver 212a and microcontroller 214a are communicatively coupled with one another. Additionally or alternatively, in some embodiments, the transceiver 212a and/or the microcontroller 214a is/are communicatively coupled with at least a portion of the processor 218, such as a particular processor associated with the wireless scanning chain 216a.

In some embodiments, the microcontroller 214a controls each low level component of the wireless scanning chain 216a. For example, in some embodiments the microcontroller 214a controls a state machine to activate the various components of the wireless scanning chain 216a and collect scan data that results from one or more of the antenna chains associated therewith. In this regard, the microcontroller 216a in some embodiments is specially programmed to transition throughout the low-level stack state machine (e.g., an RFID stack state machine) to activate a particular antenna chain as the activate antenna chain, and/or proceed with activating each antenna in the activate antenna chain. In some embodiments, the microcontroller 214a is communicatively coupled with general-purpose input/output circuitry that facilitates sending of signal(s) to control the switch 206a, the transceiver 212a, and/or any of the plurality of antenna chains, such as 202a and/or 204a, and/or send data via and/or receive data from such components.

The wireless scanning chain 216a, for example as illustrated, further includes a power amplifier 208a. In some embodiments, the power amplifier 208a amplifies a signal from the transceiver 212a of the antenna control 210a to a desired level for output by a corresponding antenna chain, such as one of the antenna chain 202 and/or 204a of the wireless scanning chain 216a. In some embodiments, for example, the power amplifier 208a amplifies a signal from the transceiver to a particular decibel level for outputting via an active antenna chain within a particular electrical field. In one example context, the power amplifier 208a amplifies an input signal to 30 decibels for use in generating radio signal waves via an active antenna chain at a particular signal strength and/or within a particular effective area. In some embodiments, the power amplifier 208a is communicatively coupled with one or more component(s) of the antenna control 210a, for example at least the transceiver 212a. In some embodiments, the power amplifier 208a is part of an RF front end embodying or otherwise including a power amplifier and a low noise amplifier, which amplifies input signal(s) without introducing significant noise into the data signal for transmission by the one or more antennas. In some embodiments, the RF front end includes other components as depicted and described with respect to FIG. 2, and/or other components that facilitate reception and/or transmission of RF signal waves and corresponding response data.

The wireless scanning chain 216a, for example as illustrated, further includes a switch 206a. In some embodiments, the switch 206a toggles between the plurality of antenna chains associated with the wireless scanning chain 216a, specifically antenna chain 202a and antenna chain 204a as illustrated. For example, in some embodiments the switch 206a embodies a switch that toggles between two possible outputs (e.g., a single pole double throw switch) based on an input control signal. In this regard, the selected output to which the switch 206a is set determines the active antenna chain from a plurality of antenna chains possibly selectable via the switch 206a. It will be appreciated that the switch 206a may be of any configuration to enable selection between any of a number of outputs. For example, in some other embodiments, the switch 206a embodies a single pole four throw switch, and/or a switch with more than four throws. It will be appreciated that, in some such embodiments, the plurality of antenna chains for a single wireless scanning chain may be equal to or less than the number of available throws (e.g., outputs) of the corresponding switch 206a. In some embodiments, the switch 206a is embodied by a multiplexer.

In some embodiments, the processor 218 is communicatively coupled with the switch 206a, and controls the selected output of the switch 206a. Alternatively or additionally in some embodiments, the microcontroller 214a and/or transceiver 212a is communicatively coupled with switch 206a, and controls the selected output of the switch 206a. It will be appreciated that the switch 206a in some embodiments includes at least a minimum number of throws corresponding to a number of plurality of antenna chains to which that switch 206a is communicatively coupled for the wireless scanning chain 216a. Further, it will be appreciated that in some embodiments, not all throws of the switch are connected to an antenna chain, for example in circumstances where the switch includes more throws than necessary for a particular number of antenna chains.

The wireless scanning chain 216a, for example as illustrated, further includes a plurality of antenna chains. As depicted, the plurality of antenna chains associated with the wireless scanning chain 216a includes the antenna chain 202a and antenna chain 204a. It will be appreciated that, in some embodiments, each antenna chain includes any number of antenna(s) daisy chained to one another for generating radio signal waves and/or receiving scan data in response to generated radio signal waves. In other embodiments, the antenna chain includes one or more additional power source(s) and/or amplifiers that set the input signal to each antenna to a desired value.

As illustrated, the switch 206a is communicatively coupled with each of the plurality of antenna chains for the wireless scanning chain 216a, for example the antenna chain 202a and antenna chain 204a. The switch 206a is set to a particular position to select an active antenna chain from the plurality of antenna chains with which it is communicatively coupled. In this regard, each of the plurality of antennas in the antenna chain receives an input signal that activates the antenna, for example to generate radio signal waves, based at least in part on the received input signal. Additionally or alternatively, in some embodiments each of the plurality of antennas in the antenna chain is activated to detect incoming signal waves embodying scan data received in response to the radio signal waves output by that antenna. It will be appreciated that, in some embodiments, each subsequent antenna in the active antenna chain is activated with a different signal than the one before it. For example, due to loss and/or power drop between a particular antenna and the next antenna in the antenna chain, the signal activating each antenna may differ based on a loss factor.

In some embodiments, each antenna in an antenna chain is associated with a particular location in an environment. The location with which an antenna is associated in some embodiments corresponds to a field strength with which that antenna is activated. For example, in some embodiments, the antenna chain 202a includes a plurality of antennas where each antenna is associated with a location along a top-left shelving unit of an environment (e.g., a delivery vehicle, warehouse, and/or the like), where each location corresponds to a particular slot or segment of the shelving unit where a data-tagged object or plurality of data-tagged objects may be positioned. Similarly, the antenna chain 202b in some embodiments includes a plurality of antennas where each antenna is associated with a location along a top-right shelving unit of an environment, where each location corresponds to a particular slot or segment of the shelving unit where a data-tagged object or plurality of data-tagged objects may be positioned.

In some embodiments, each antenna in the active antenna chain receives a portion of scan data that represents incoming signals detected in response to transmission of corresponding output radio signal waves. In some embodiments, each antenna of the active antenna chain is activated in sequence, such that the active antenna emits signal wave(s) and receives data indicating a response to the emitted signal wave(s), with the received data representing at least a portion of the scan data for that antenna. In some embodiments, the antenna or a corresponding control unit (e.g., an associated microprocessor and transceiver, or other control unit(s)) adds one or more data value(s) to such received data to embody the scan data, such as an associated antenna identifier or location identifier. In some embodiments, such scan data includes one or more data identifier(s) corresponding to data tag(s), smart label(s), and/or the like of data-tagged object(s) positioned at the location scanned by the corresponding antenna that received the scan data. In this regard, a location identifier corresponding to or representing the particular location of a detected data identifier is determinable based at least in part on the antenna that received the data identifier. For example, in some embodiments, the processor 218 and/or the like stores a location identifier associated with each antenna, such that the location identifier for a particular data identifier is determinable based at least in part on the antenna that received the data identifier as scan data in response to transmission of one or more signal wave(s) upon activation. Additionally or alternatively, during and/or before activation of a particular antenna, the antenna receives input signals configuring the antenna to utilize a RF channel or channel sequence, configure a switch of the antenna to a particular operational mode (e.g., to a "LOCAL" or "BYPASS" mode), and/or the like.

In some embodiments, each antenna is set to a particular mode to enable scanning by a particular, active antenna within the active antenna chain. For example, in some embodiments, the microcontroller 214a and/or transceiver 212a generates input signal(s) that set all or at least some of the antennas in the active antenna chain (e.g., the antennas before an intended antenna to be activated) to a first mode that causes the antenna to bypass received signal(s) (e.g., a "BYPASS" mode). Additionally or alternatively, in some such embodiments the microcontroller 214a and/or transceiver 212a generates input signal(s) that set a particular antenna intended to be activated to a second mode that causes the antenna to emit signal waves (e.g., by emitting energy) based at least in part on received input signal(s) (e.g., by setting the antenna to a "LOCAL" mode). In this regard, the microcontroller 214a and/or transceiver 212a, for example, may cycle activation of each antenna in the active antenna chain to enable capture of scan data by each antenna one at a time.

It will be appreciated that each of the remaining wireless scanning chains of the parallel scanning apparatus 200 in some embodiments includes similar components to and functions similarly to the similarly named wireless scanning chain 216a. In some embodiments, the parallel scanning apparatus 200 includes one or more other wireless scanning chains that operate in parallel with the wireless scanning chain 216A for scanning other locations of an environment in parallel. For example, in some embodiments, the parallel scanning apparatus 200 includes two additional wireless scanning chains, such as wireless scanning chains 216b and 216c. In one example context, the wireless scanning chain 216b includes a plurality of antenna chains that includes at least a first antenna chain, for example the antenna chain 202b, including a plurality of antennas, each positioned associated with a location along a middle-left shelving unit of a particular environment. Additionally, the wireless scanning chain 216b includes a second antenna chain, for example the antenna chain 204b, including a plurality of antennas, each positioned associated with a location along a middle-right shelving unit of a particular environment. Similarly, in some embodiments, the wireless scanning chain 216c includes a plurality of antenna chains that includes at least a first antenna chain, for example the antenna chain 202c, including a plurality of antennas, each positioned associated with a location along a bottom-left shelving unit of a particular environment. Additionally, the wireless scanning chain 216c includes a second antenna chain, for example the antenna chain 204c, including a plurality of antennas, each positioned associated with a location along a bottom-right shelving unit of a particular environment.

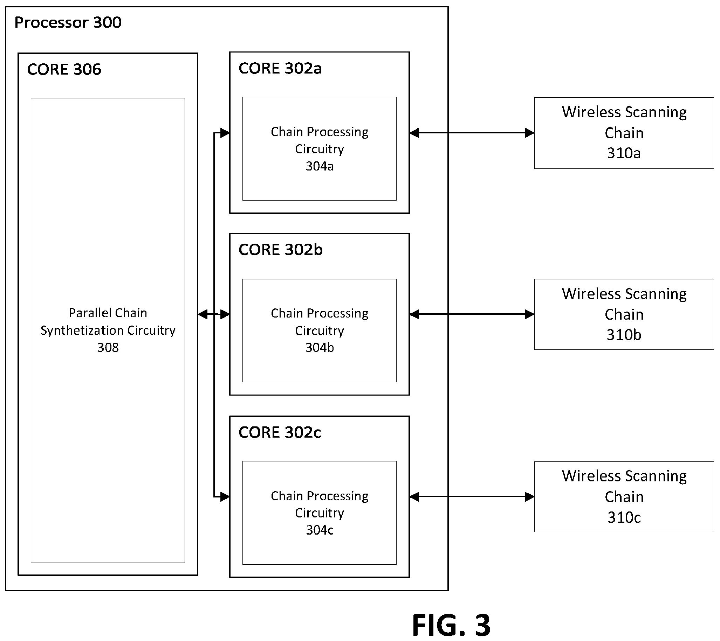

In some embodiments, the parallel scanning apparatus 200 performs a parallel scanning process that enables receiving and/or processing of scan data from an active antenna chain of each of the wireless scanning chains 216a-216c in parallel. For example, in this regard, each of the wireless scanning chains 216a-216c are operated in parallel to enable scanning of a plurality of locations associated with different portions of an environment simultaneously, thereby reducing the total time required to search the environment and determine a location identifier associated with a particular data identifier, or a plurality of location identifiers associated with a plurality of data identifiers. In some such embodiments, each wireless scanning chain corresponds to a particular core, or other portion, of the processor 218 that controls and/or stores data associated with a corresponding wireless scanning chain. Additionally or alternatively, in some embodiments, the processor 218 includes one or more core(s), or other portion(s), embodying a primary process core that synthesizes the operation of and/or processing of data received by each other core via a corresponding wireless scanning chain. Non-limiting example operations of a specially configured processor embodying the processor 218 are described further herein with respect to FIG. 3.

In some embodiments, each antenna of a particular antenna chain (e.g., antenna chain 202a and/or antenna chain 204a) is particularly configured to function within one or more parameter(s) that enable parallel operation of one or more antenna chain(s). Additionally or alternatively, in some embodiments, each wireless scanning chain is configured based at least in part on one or more particular parameter(s) to enable operation of the active antenna chain for each wireless scanning chain 216a-216c without interference with one another. In some embodiments, the antenna chains and/or the transceiver of each wireless scanning chain is configured to operate the antennas of the active antenna chain based at least in part on a sequence of non-overlapping frequency channels and/or distinct reference clocks. In this regard, scan data may be received via each active antenna chain in parallel, enabling reduction in the time required to scan all locations in a particular environment. It will be appreciated that the antenna chain(s) may be configured and/or positioned to meet any of a myriad of antenna isolation requirements. For example, in some embodiments, the physical position, power input to a particular antenna, frequency channel and/or sequence of each antenna, and/or the like are specially configured to enable parallel operation of two or more antenna(s) and/or of independent antenna chains.

FIG. 3 illustrates an example multi-core processor specially configured for performing a parallel scanning process in accordance with at least some embodiments of the present disclosure. Specifically, FIG. 3 illustrates an example multi-core processor 300 specially configured to enable operation of a plurality of wireless scanning chains 310a-310c in parallel. It will be appreciated that the multi-core processor 300 may include any number of cores, and need not include the exact amount of sub-cores as wireless scanning chains. Similarly, in other embodiments, the multi-core processor 300 includes additional cores to accompany additional wireless scanning chains, and/or additional cores operating as or assisting a primary process core that synthesizes data between the cores controlling the wireless scanning chains.

As illustrated, the multi-core processor 300 includes a plurality of sub-cores, each sub-core associated with operating a particular wireless scanning chain. For example, the multi-core processor 300 includes a first core 302a associated with operating wireless scanning chain 310a, a second core 302b associated with operating wireless scanning chain 310b, and a third core 302c associated with operating wireless scanning chain 310c. In this regard, in some embodiments instructions executed by a particular core are performed to activate, configure, deactivate, and/or otherwise operate one or more component(s) of the corresponding wireless scanning chain, and/or to store data received via the corresponding wireless scanning chain. In this regard, the processing power of each individual core is utilized to perform such operations in parallel with the remaining cores associated with other wireless scanning chains.

As illustrated, the core 302a includes chain processing circuitry 304a. In some embodiments, the chain processing circuitry 304a is embodied by hardware, software, firmware, and/or any combination thereof, In some embodiments, the chain processing circuitry 304a is embodied by software instructions executed on a particular portion of hardware embodying a core capable of executing such software instructions, for example the core 302a. As such, whether configured by hardware, software, firmware, or any other methods, or by any combination thereof, the chain processing circuitry 304a represents an entity capable of performing some or all of the operations according to an embodiment of the present disclosure.

In some embodiments, the chain processing circuitry 304a configures the core for operating the corresponding wireless scanning chain. For example, in some embodiments, the chain processing circuitry 304a includes specially configured executable software code instructions that control an application-specific integrated circuit embodying wireless scanning chain 310a, read data from the wireless scanning chain 310a, write data for processing by the wireless scanning chain 310a (e.g., activation signal(s) and/or the like), pre-processing resulting data received via the wireless scanning chain 310a (e.g., pre-processing scan data received via the wireless scanning chain 310a), and/or storing the scan data received via the wireless scanning chain 310a. Additionally or alternatively, in some embodiments, the chain processing circuitry 304a includes a serial peripheral interface that communicatively couples the core 302a with the wireless scanning chain 310a).

In some embodiments, the core 302a includes, embodies, or is otherwise associated with a cache specially configured to store data. In some embodiments, the cache stores scan data from the core 302a and/or retrieves stored scan data for processing via the core 302a. Alternatively or additionally, in some embodiments, the cache is accessible to one or more other cores, for example other sub-cores embodied by core 302b and/or core 302c, and/or a primary process core embodied by the core 306. In some embodiments, for example, each of the cores 302a-302c and/or the core 306 are communicatively coupled via a bus controlled by a bus arbiter. Additionally or alternatively, in some embodiments, the cores 302a-302c and/or the core 306 are communicable with one or more other sets of circuitry, for example a memory and/or input/output circuitry. In some example embodiments, it will be appreciated that in this regard the multi-core processor 300 is configured as a symmetric multiprocessor system that utilizes symmetric multiprocessing to independently configure each core as a separate processor. In some embodiments, the cores 302a-302c and 306 each are configured to provide the same computing power. In other embodiments, one or more of the cores 302a-302c or 306 differ in computing power from one or more of the other cores.

The core 302b similarly includes chain processing circuitry 304b communicatively coupled for operating the corresponding wireless scanning chain 310b. Additionally, the core 302c similarly includes chain processing circuitry 304c communicatively coupled for operating the corresponding wireless scanning chain 310c. It will be appreciated that in some embodiments, each of the chain processing circuitry 304b and chain processing circuitry 304c similarly control operation of the corresponding wireless scanning chains 310b and 310c. In some embodiments, each of the cores 302a, 302b, and 302c independently execute the chain processing circuitry 304a, 304b, and 304c to enable operation of the wireless scanning chains 310a, 31 0b, and 310c in parallel with one another. In this regard, in some embodiments each of the cores 302a, 302b, and 302c operate the corresponding wireless scanning chains 310a, 310b, and 310c to independently receive, store, and process independent portions of scan data captured via each of the wireless scanning chains 310a, 310b, and 310c.

The multi-core processor 300 further includes a primary process core 306. In some embodiments, the primary process core 306 includes parallel chain synthetization circuitry 308. In some such embodiments, the parallel chain synthetization circuitry 308 configures the primary process core 306 to interact with the cores 302a-302c and/or process data stored via the individual cores 302a-302c. For example, in some embodiments, the parallel chain synthetization circuitry 308 includes specially configured executable software code instructions that are executed by the primary process core 306 to cause such interaction between the plurality of cores 302a, 302b, and 302c. In some embodiments, the parallel chain synthetization circuitry 308 controls the primary process core 306 to initiate and/or configure each of the cores 302a, 302b, and/or 302c as sub-cores, aggregate scan data results stored by each of the cores 302a, 302b, and/or 302c, perform post-processing of scan data results stored by each of the cores 302a, 302b, and/or 302c, generate one or more data inference(s) associated therewith, and/or otherwise determine location identifier associated with each of one or more data identifiers (e.g., a location identifier for each target data identifier, such as all received data identifiers in the aggregated scan data or a particular subset thereof) based at least in part on the aggregated scan data. In this regard, it will be appreciated that in some embodiments the primary process core 306 is communicatively coupled with each of the cores 302a, 302b, and 302c, with the parallel chain synthetization circuitry 308 controlling the primary process core 306 to perform computer-implemented process(es) that leverage the scan data captured via each of the sub-cores 302a-302c.

In some embodiments, each sub-core controls parameters associated with a corresponding wireless scanning chain and/or receives scan data from the corresponding wireless scanning chain. The sub-core and corresponding wireless scanning chain is referred to as a "wireless scanning stream." A single multi-core processor and plurality of wireless scanning chains may thus embody any number of wireless scanning streams, of each of which operates in parallel and is synthesized by a primary core of the multi-core processor. Some such embodiments include a number of wireless scanning streams that equals the number of available sub-cores of the multi-core processor, each sub-core corresponding to a wireless scanning chain.

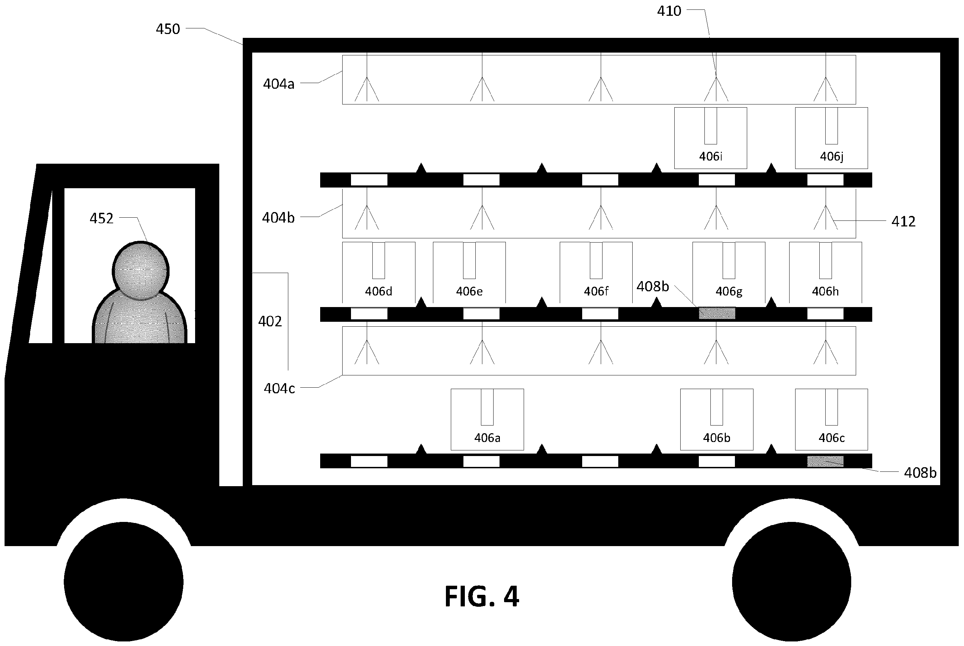

FIG. 4 illustrates an example delivery vehicle environment configured for performing a parallel scanning process in accordance with at least some embodiments of the present disclosure. Specifically, FIG. 4 depicts an example delivery vehicle 450 embodying a particular environment within which data-tagged objects 406a-406i (collectively "data-tagged objects 406") are positioned. In some embodiments, the delivery vehicle 450 includes space that stores one or more data-tagged objects for delivery. In some embodiments, the delivery vehicle 450 includes a plurality of shelving units, sections, and/or other organizational structures that facilitate organization and/or storage of the data-tagged objects therein. In some embodiments, the delivery vehicle 450 includes a plurality of shelving units, sections, and/or other organizational structures on both sides of the delivery vehicle 450. For example, in some embodiments, the delivery vehicle 450 includes three-tiered shelving unit on each side of the delivery vehicle (e.g., a driver's side representing a left side and a passenger's side representing a right side), with each shelving unit divided into a plurality of top locations, middle locations, and bottom locations.

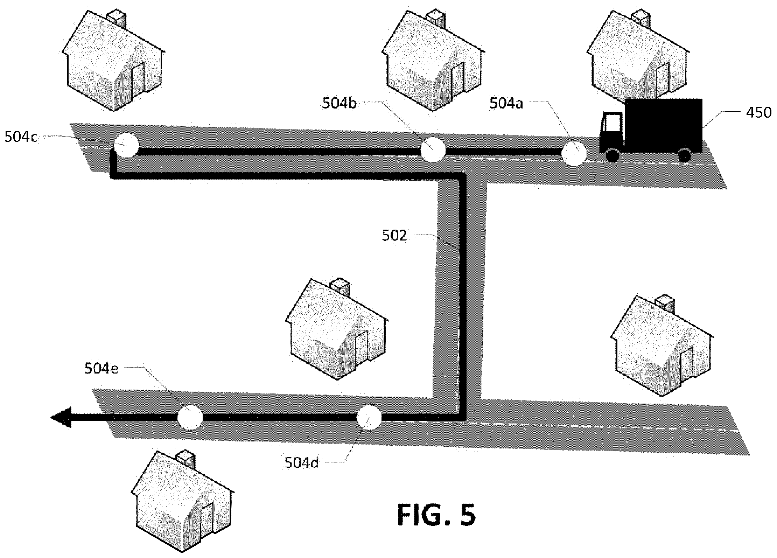

In some example contexts, the delivery vehicle 450 is controlled by a user 452, for example representing a delivery driver that is tasked with driving the delivery vehicle 450 along a particular path and delivering one or more of the data-tagged objects 406 at various stops along the path. One such example path and delivery of data-tagged objects is further depicted and described herein with respect to FIG. 5. In some embodiments, as the user 452 drives the delivery vehicle 450 and/or interacts with the data-tagged objects 406 therein, the location of each data-tagged object within the environment may change. For example, during driving of the delivery vehicle 450 the data-tagged objects 406 may slide around the environment to different positions, including different locations on the same side of the delivery vehicle, different locations on the other side of the delivery vehicle, and/or the like. Additionally or alternatively, in some contexts, while the user 452 is attempting to retrieve one or more particular object(s) for delivery the user 452 interacts with the remaining data-tagged objects to relocate such remaining data-tagged objects throughout the delivery vehicle 450. In this regard, as the locations of the particular data-tagged objects 406 change, determining the up-to-date location of a particular data-tagged object to be delivered (e.g., at a next stop along a path) becomes increasingly important to identify the correct data-tagged object for delivery accurately ad within sufficient time to enable such scanning and identification to be completed between delivery stops.

As illustrated, the delivery vehicle 450 includes a plurality of specially configured computing devices each embodied in hardware, software, firmware, and/or a combination thereof, that enables performance of a parallel scanning process for determining a location identifier associated with each of at least one target data identifier. In this regard, the at least one target data identifier in some embodiments represents a unique identifier corresponding to an data-tagged object to be delivered at a next target travel point (e.g., a delivery stop) along a particular path represented by delivery path data. In some such embodiments, the plurality of specially configured computing devices performs the parallel scanning process as an inventory cycle process upon indication of travel to a next target travel point along a particular path, and/or upon indication of completion of all deliveries at a current or previous travel point along a particular path.

In some embodiments, the parallel wireless control system 402 is communicatively coupled with a plurality of antenna chains, including the antenna chains 404a-404c. As depicted, the plurality of antenna chains 404a-404c includes an antenna chain 404a associated with locations along a top shelving unit, an antenna chain 404b associated with locations along a middle shelving unit, and an antenna chain 404c associated with locations along a bottom shelving unit. In some example contexts, the delivery vehicle 450 includes an antenna chain on each side of the delivery vehicle 450 together with shelving units along each side of the delivery vehicle 450, for example such that the delivery vehicle 450 includes antenna chain 404a along locations of a top-left shelving unit, and a corresponding antenna chain along a top-right shelving unit (not depicted). In some embodiments, each of the plurality of antenna chains 404a-404c is communicatively coupled with a distinct transceiver of the parallel wireless control system 402 to enable parallel control of each of the antenna chains 404a-404c, and/or a distinct switch of the parallel wireless control system 402 to enable parallel control of one of the antenna chains 404a-404c or a corresponding antenna chain on the other side of the delivery vehicle 450.

In some embodiments, the parallel wireless control system 402 determines a location identifier representing a location of an data-tagged object of the data-tagged objects 406 that corresponds to a target data identifier. In this regard, the parallel wireless control system 402 in some embodiments interacts with the plurality of antenna chains 404a-404c to activate each antenna and receive scan data associated therewith. The scan data in some embodiments includes data identifier(s) corresponding to data-tagged objects with RFID tags, smart labels, or other elements within the active field of the particular antenna. In some embodiments each antenna transmits signal waves within a volume located from the end of the antenna where object(s) are expected or otherwise predetermined as likely to be located. For example the antenna 410 in some embodiments is powered to generate signal waves that reach the data-tagged object 406i at a second location along a top-left shelving unit. Additionally or alternatively, the antenna 412 generates signal waves that reach the data-tagged object 406h. In this regard, in response to being activated, the antenna 410 receives and forwards a data identifier associated with data-tagged object 406i, whereas the antenna 412 receives and forwards a data identifier associated with data-tagged object 406h to one or more components of the parallel wireless control system 402 for further processing.

In some embodiments, the parallel wireless control system 402 identifies and/or receives (e.g., from associated systems, such as path management system 110 and/or data identifier management system 112) target data identifier(s) for delivery at a next target travel point along a path corresponding to delivery path data that the delivery vehicle 450 is traveling. In some embodiments, the delivery path data is automatically determined by the parallel wireless control system 402, a system associated with navigating the delivery vehicle 450, and/or the like. For example, in some embodiments, the parallel wireless control system 402 receives the delivery path data from a central system that coordinates a fleet of delivery vehicles, including the delivery vehicle 450. Alternatively or additionally, in some embodiments the delivery driver 452 inputs the delivery path data via user input with the parallel wireless control system 402, a navigation system, and/or the like. In some other embodiments, the parallel wireless scanning process is performed to identify a location identifier for every detected data identifier, such that each detected data identifier embodies a target data identifier. In this regard, some embodiments of the present disclosure determine a location identifier for each data identifier corresponding to a data-tagged object in the environment.

It will be appreciated that, any number of data identifier(s) corresponding to any number of data-tagged objects is/are associated with each target travel point represented in the delivery path data. In this regard, in some embodiments the parallel wireless control system 402 identifies the relevant data identifier(s) for the next target travel point as the delivery vehicle 450 travels from target travel point to target travel point. Once each target travel point, the delivery driver 452 enters the delivery vehicle 450 to identify and remove the relevant data-tagged object(s) of the data-tagged objects 406 for delivery to that target travel point.

In some embodiments, the parallel wireless control system 402 determines the location identifier(s) corresponding to target data identifier(s) for any number of the data-tagged objects 406 to provide output that assists the delivery driver 452 in identifying the data-tagged object(s) corresponding to such target data identifier(s). In some embodiments, the parallel wireless control system 402 triggers activation of one or more location environmental indicator within in the environment. In this regard, the parallel wireless control system 402 in some embodiments triggers activation of particular location environmental indicators that correspond to a location identifier determined for a target data identifier. In such example contexts, the delivery driver 452 may utilize the location environmental indicator(s) that are activated to quickly and accurately identify the location of data-tagged object(s) to be delivered at a target travel point once the delivery vehicle 450 has arrived at that target travel point.

As illustrated, the delivery vehicle 450 includes location environmental indicators along the shelving unit at each location where data-tagged object(s) may be positioned. In one example context, the location environmental indicators embody lights that, upon activation, illuminate or are set to a particular visual configuration (e.g., change color) to indicate a location of an data-tagged object to be delivered at the next target travel point once reached. As depicted, for example, the delivery vehicle 450 includes a location environmental indicator 408a associated with a second location along a middle-left shelving unit of the delivery vehicle 450 and a location environmental indicator 408b associated with a first location along a bottom-left shelving unit of the delivery vehicle 450. The location environmental indicators 408a and 408b are activated to illuminate at a particular determined illumination indicating a location of a data-tagged object for delivering based on the target data identifier(s) for the next target travel point, for example as depicted by the shading of the location environmental indicators 408a and 408b. It will be appreciated that the location environmental indicator(s) associated with a particular location in the environment may be positioned anywhere that assists in identifying the location. For example, in some embodiments, the location environmental indicator is positioned above or below the particular location associated with the location environmental indicator. Alternatively or additionally, the location environment indicator may be positioned in any other position that enables a user to identify the location corresponding to the location environmental indicator.

In other embodiments, it will be appreciated that the location environmental indicators may embody other sensory indicators. For example, in some embodiments, one or more of the location environmental indicators includes a speaker or other audio source that, upon activation, outputs audio tone(s), message(s), and/or other information indicating a particular location corresponding to a target data identifier. In some such embodiments, a voice message is output from a speaker positioned at the location, and/or from a speaker worn by or otherwise associated with a user (e.g., via a wearable) that instructs the user to select an object at a particular location. Alternatively or additionally, in some embodiments, one or more of the location environment indicators includes a tactile indicator having a physical topography altered to indicate a particular location corresponding to a target data identifier, or another touch-based indicator. It will be appreciated that any sense-based indication may be utilized.

In some embodiments, the parallel wireless control system 402 transmits activation signal(s) to the particular location environmental indicator(s) corresponding to each location identifier for a target data identifier to trigger activation of the location environmental indicator. Alternatively or additionally, in some embodiments the parallel wireless control system 402 transmits one or more signal(s) to an associated system that controls activation of the location environmental indicators within the delivery vehicle 450. It will be appreciated that in various embodiments, the location environmental indicator(s) indicate a location of data-tagged object to be delivered in any of a myriad of manners. For example, in some embodiments an activated location environmental indicator illuminates at a set or otherwise determined illumination. Alternatively or additionally, in some embodiments an activated location environmental indicator illuminates at a particular pattern (e.g., flashing illumination at a determined rate between pulses). Alternatively or additionally, in some embodiments, an activated location environmental indicator changes configuration from a first illumination configuration (e.g., of a first color or brightness, for example) to a second illumination configuration (e.g., of a second color or brightness, for example).

Additionally or alternatively, in some embodiments, the parallel wireless control system 402 outputs one or more user interface(s) based at least in part on the location identifier(s) determined for one or more target data identifier(s). For example, in some embodiments, the parallel wireless control system 402 causes rendering of a user interface to a display associated with the delivery vehicle 450 (e.g., an onboard display) and/or a display associated with the delivery driver 452 (e.g., a display of a user computing device controlled by the delivery driver 452 that is communicable with the parallel wireless control system 402). In some embodiments, the parallel wireless control system 402 causes rendering of a user interface that indicates location(s) within the delivery vehicle 450, where data-tagged objects corresponding to the target data identifier(s) are located. Alternatively or additionally, in some embodiments, the parallel wireless control system 402 causes rendering of a user interface that includes interface element(s) depicting the location identifier(s) and/or corresponding description(s) of such location identifier(s). For example, in one example context, each location identifier corresponds to a particular human-readable location description (e.g., a number "1," "2," or "3" corresponding to the top shelving unit, middle shelving unit, and bottom shelving unit respectively, and a letter designation corresponding to a particular slot along the respective shelving unit), and the user interface is rendered including one or more interface element(s) that depict the human-readable location description(s) corresponding to the location identifier(s) for the target data identifier(s).

It will be appreciated that the delivery vehicle environment provides merely one exemplary context within which embodiments of the disclosure provide a myriad of technical advantages. In various other contexts and environments, embodiments of the present disclosure provide the same, similar, and/or additional technical advantages. For example, embodiments of the present disclosure provide various technical advantages in a warehouse environment, retail environment, fulfillment center environment, and/or the like. In this regard, embodiments of the present disclosure may provide technical advantages by increasing accuracy and reducing execution time for inventory cycle process(es) in any context where data-tagged object(s) are to be located once or via a plurality of cycles.

FIG. 5 illustrates a visualization of an example path including multiple target travel points in accordance with at least some embodiments of the present disclosure. Specifically, FIG. 5 illustrates an example path 502 along which a delivery vehicle 450 is travelling. The path 502 includes a plurality of target travel points 504a-504e arranged along the path 502. In this regard, the arranged sequence of target travel points 504a-405e defines an order of target travel points where the delivery vehicle 450 is to stop and deliver one or more object(s). As described herein, in some embodiments the target travel points defining the path 502 are received from a path management system 110 and/or a data identifier management system 112 that generates, maintains, and/or assigns delivery paths for one or more delivery vehicles, such as the delivery vehicle 450.

The time that the delivery vehicle 450 takes to travel between a target travel point and a next target travel point along the path 502 varies with each target travel point. For example, as depicted in FIG. 5, the distance between the target travel point 504a the next target travel point 504b embodies a shorter distance than that between the target travel point 504b and the next target travel point 504c. Similarly, the distance between the target travel point 504b and the next target travel point 504c embodies a shorter distance than that between target travel point 504c and the next target travel point 504d. In this regard, it will be appreciated that the delivery vehicle 450 may travel between the target travel points 504a and 504b in less time than the delivery vehicle takes to travel between the target travel points 504b and 504c.

In some embodiments, a parallel scanning process associated with the delivery vehicle 450 is performed while traveling between a current target travel point and a next target travel point for a particular path embodied by particular delivery path data. For example, in some embodiments, a wireless parallel scanning system (e.g., a RFID parallel scanning system embodied by a parallel scanning apparatus 200 for example) within or otherwise associated with the delivery vehicle 450 performs the parallel scanning process utilizing a plurality of antenna chains positioned within or otherwise associated with the delivery vehicle 450. In this regard, in some embodiments the parallel scanning apparatus determines location identifier(s) for one or more target data identifier(s) corresponding to data-tagged objects to be delivered at the next target travel point. By performing the parallel scanning process that utilizes a subset of the plurality of antenna chains that operated in parallel, embodiments of the present disclosure advantageously complete such a parallel scanning process in reduced time to enable identification of location identifier(s) corresponding to data-tagged object(s) to be delivered at the next target travel point as the delivery vehicle travels from the current target travel point to the next target travel point. Such embodiments advantageously enable identification of location identifier(s) corresponding to such data-tagged object(s) to be delivered in contexts with shorter distances between a current target travel point and a subsequent target travel point with less delay for completion of the parallel scanning process, further resulting in reduced delay to provide output to the delivery driver indicating location(s) of data-tagged object(s) to be delivered once the delivery vehicle 450 reaches the next target travel point.

In some embodiments, the parallel scanning process is initiated upon particular data-driven trigger(s). For example, in some embodiments, the parallel scanning process is initiated based at least in part on detecting movement data towards a particular next travel point. Alternatively or additionally, in some embodiments, the parallel scanning process is initiated based at least in part on locations services data (e.g., GPS data) indicating where the environment is located, and/or a determination of a next target travel point. Additionally or alternatively still, in some embodiments, the parallel scanning process is initiated based at least in part on a time-based trigger (e.g., every set period of time).

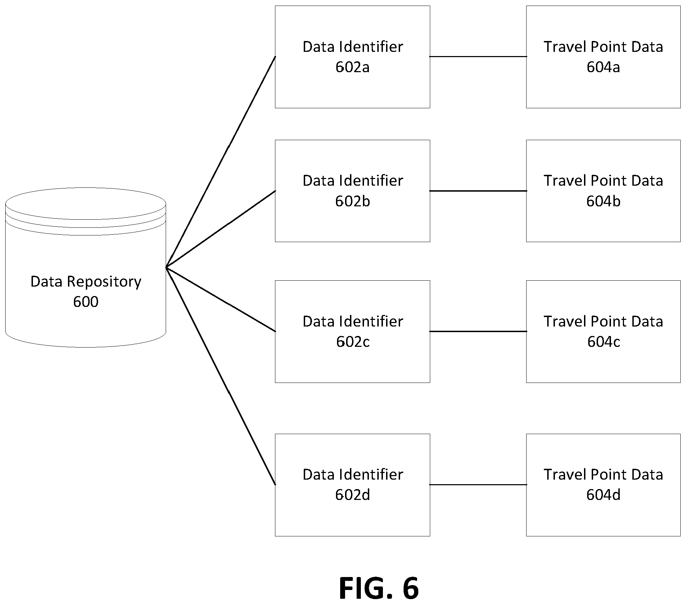

FIG. 6 illustrates an example data repository structure in accordance with at least some embodiments of the present disclosure. Specifically, FIG. 6 depicts a data repository 600 configured to store any of a myriad of data utilized to facilitate some or all of a parallel scanning process. As illustrated, the data repository 600 includes a plurality of data identifiers 602a-602d associated with or otherwise linked to a plurality of travel point data 604a-604d, with each data identifier corresponding to particular travel point data. The data repository 600 in some embodiments is maintained by and/or otherwise accessible to one or more computing device(s), system(s), apparatus(es), and/or the like. For example, in some embodiments, the data repository 600 is maintained by a parallel scanning apparatus, for example embodied by a parallel scanning apparatus 200. Alternatively or additionally, in some embodiments, the data repository 600 is maintained by one or more system(s) external and communicable with a parallel scanning apparatus, for example a path management system 110 and/or data identifier management system 112.

In some embodiments, each data identifier uniquely identifies a corresponding data-tagged object. For example, in some such embodiments, a data identifier embodies a global unique identifier corresponding to a particular object. For example, in some embodiments the data identifier embodies a numeric, alphabetical, or alphanumeric identifier that uniquely identifies a particular object being stored and/or transported (e.g., for delivery) in a particular environment. In one example context, an inventory management system (for example, embodied by a data identifier management system 112) associated with storing and/or transporting packages generates the data identifier corresponding to each object managed by the system.

In some embodiments, the data identifier in some embodiments is encoded by, stored to, and/or otherwise made accessible via a wirelessly-detectable element (e.g., an RFID element). In some embodiments, the wirelessly-detectable element is affixable or otherwise securable to an object. In one example context, the wirelessly-detectable element is affixed to the object uniquely identified by the data identifier encoded by, stored to, and/or otherwise made accessible to that wirelessly-detectable element. For example, non-limiting examples of wirelessly-detectable elements and corresponding data identifier(s) include an RFID tag configured to store a particular data identifier (e.g., by writing the data identifier to the RFID tag), a smart label including or embodying an RFID tag configured to store a particular data identifier, and the like. Such wirelessly-detectable element(s) are affixable to objects using adhesive, fastener(s), custom securing mechanism(s), and/or the like. It will be appreciated that an object affixed or otherwise "tagged" with a wirelessly-detectable element enables detection of the data stored to, encoded by, and/or otherwise accessible via the wirelessly-detectable element as the object is relocated. In this regard, the object affixed or otherwise "tagged" with a wirelessly-detectable element embodies an data-tagged object detectable using signal waves by one or more device(s), such as a parallel scanning apparatus utilizing one or more antenna(s) thereof.

In some embodiments, a data identifier corresponding to a particular object includes one or more additional and/or alternative data values associated with the object. For example, in some embodiments, a data identifier includes a name of an object, a physical description of an object, data values indicating an object size, color, source, and/or the like. It will be appreciated that in some such embodiments, a data identifier is structured in any of a myriad of manners to include such data value(s).

In some embodiments, the data repository 600 is configured to store a data identifier for each data-tagged object in a particular environment. For example, in one example context of a delivery environment, the data repository 600 includes a data identifier corresponding to each data-tagged object within the delivery environment and to be delivered at a particular target travel point. For example, in one such example context the data identifier 602a corresponds to a first data-tagged object loaded onto a delivery vehicle, the data identifier 602b corresponds to a second data-tagged object loaded onto the delivery vehicle, the data identifier 602c corresponds to a third data-tagged object loaded onto the delivery vehicle, and the data identifier 602d corresponds to a fourth data-tagged object loaded onto the delivery vehicle. In some embodiments, the data identifiers 602a-602d are stored together with one or more additional data identifier(s) associated with data-tagged object(s) in the same environment and/or other environment(s) (e.g., on other delivery vehicles).

As illustrated, the each travel point data uniquely identifies a particular travel point. In one example context, each travel point data uniquely identifies a travel point embodying a particular address, coordinate, or other data value(s) indicating an absolute or relative location. In one example context, travel point data represents a particular street address, latitude and longitude coordinate, or other location services data usable to navigate to a particular position represented by the travel point data.

In some embodiments, the data repository 600 stores one or more data identifier(s) linked to corresponding travel point data that represents a target travel point where the data-tagged object represented by the data identifier is to be delivered. In some embodiments, the data repository 600 stores a data record or data value linking a data identifier with corresponding travel point data. For example, in some embodiments the data repository 600 stores a data record for each data identifier, and in the data record includes a parameter (e.g., a column) set to a data value embodying the linked travel point data associated with that data identifier. It will be appreciated that in some embodiments the travel point data corresponding to a particular data identifier is determinable automatically, and in other embodiments the travel point data corresponding to a particular data identifier is manually set in response to user input.

As illustrated, the data identifier 602a is linked with the travel point data 604a, for example indicating that the data-tagged object corresponding to data identifier 602a is to be delivered at a particular address or other position represented by the travel point data 604a. In an example context of a delivery environment (e.g., a delivery vehicle delivering data-tagged objects embodying packages to recipients of said packages), the travel point data 604a embodies an address associated with delivering the data-tagged object corresponding to the data identifier 602a. Similarly, the data identifier 602b is linked or otherwise associated with the travel point data 604b, the data identifier 602c is linked or otherwise associated with the travel point data 604c, and the data identifier 602d is linked or otherwise associated with the travel point data 604d. In this regard, the data identifiers 602a-602d may each be associated with individual addresses or other data that indicates where the data-tagged objects corresponding to such data identifiers are to be delivered.

Some embodiments access and/or otherwise utilize the data repository 600 to identify data-tagged objects to be delivered along a particular delivery path represented by delivery path data. For example, in some embodiments the delivery path includes a plurality of target travel points representing the stops along the delivery path in a particular sequence, such that the delivery path is formed of an arrangement of next target travel points. In some such embodiments, the data-tagged objects loaded to a particular environment (e.g., a delivery vehicle) correspond to all data identifiers linked with travel point data embodying target travel points along a particular delivery path. For example, in the example context of a loading station environment for a fleet of delivery vehicles, the data repository 600 in some embodiments is utilized to identify the data identifier(s) corresponding to target travel points along a particular travel path, and a parallel scanning process is utilized to identify location identifier(s) for such data identifier(s) within the loading station environment.

### EXAMPLE PROCESSES OF THE DISCLOSURE

Having described example systems and apparatuses, environments, and data storage implementations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

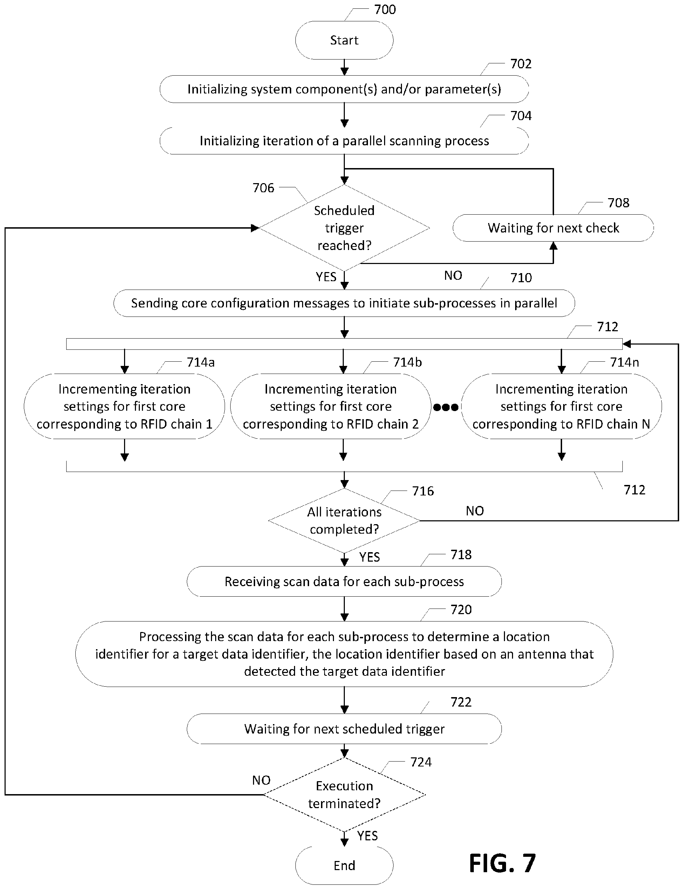

FIG. 7 illustrates a flowchart including operations of an example process for performing parallel scanning process(es) in accordance with at least some embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Alternatively or additionally, in some embodiments, the process 700 is performed by one or more specially configured computing devices, such as the parallel scanning apparatus 200 alone or in communication with one or more other component(s), device(s), system(s), and/or the like. In this regard, in some such embodiments, the parallel scanning apparatus 200 is specially configured by computer-coded instructions (e.g., computer program instructions) stored thereon, for example in the memory 220 and/or another component depicted and/or described herein and/or otherwise accessible to the parallel scanning apparatus 200 such as the microcontrollers 214a-c thereof, for performing the operations as depicted and described. In some embodiments, the parallel scanning apparatus 200 is in communication with one or more external apparatus(es), system(s), device(s), and/or the like, to perform one or more of the operations as depicted and described. For example, the parallel scanning apparatus 200 in some embodiments is in communication with a path management system 110 and/or data identifier management system 112. For purposes of simplifying the description, the process 700 is described as performed by and from the perspective of the parallel scanning apparatus 200.

The process 700 begins at operation 702. At operation 702, the parallel scanning apparatus 200 includes means to initialize one or more system component(s) and/or parameter(s) of the parallel scanning apparatus 200. In some embodiments, the parallel scanning apparatus 200 via the processor 218 initiates initializing of the system component(s) and/or parameter(s) of the parallel scanning apparatus 200. For example, in some embodiments, a primary process core of the processor 218 is configured, for example by computer-coded instructions stored to the memory 220 and executed via the primary process core, to initialize the system component(s) and/or parameter(s) of the parallel scanning apparatus 200 to enable use of a plurality of wireless scanning chains, such as the wireless scanning chains 216a-216c, to perform a parallel scanning process. Additionally or alternatively, in some embodiments, the parallel scanning apparatus 200 via the processor 218 initializes one or more sub-cores of the processor 218 for operating and/or otherwise interacting with one or more wireless scanning chains, for example the wireless scanning chains 216a-216c.

In some embodiments, the parallel scanning apparatus 200 initializes one or more microcontroller(s), antenna(s) and/or other radio(s), peripheral(s), and/or the like for performing a parallel scanning process. Additionally or alternatively, in some embodiments the parallel scanning apparatus 200 initializes one or more messaging frameworks for performing a parallel scanning process. In some such embodiments, the parallel scanning apparatus 200 initializes an antenna selection parameter value, a dwell time value, a field strength value, a RF frequency channel sequence, and/or the like that enables operation of a plurality of wireless scanning streams in parallel. It will be appreciated that the parallel scanning apparatus 200 may initialize one or more parameter value(s) that enable operation of a particular sub-core controlling a corresponding wireless scanning chain and/or a parameter value(s) that enable control of a transceiver, switch, and/or antenna chain(s) of each corresponding wireless scanning chain.

At operation 704, the parallel scanning apparatus 200 includes means to initialize an iteration of a parallel scanning process. In some embodiments, the parallel scanning apparatus 200 initializes each one or more sub-core(s) of a multi-core processor, such as the processor 218, to utilize particular parameter values to operate one or more components of the parallel scanning apparatus 200 while executing the iteration of the parallel scanning process. For example, in some embodiments, the parallel scanning apparatus 200 initializes a field strength parameter, an RF port antenna selection parameter, a dwell time parameter for each antenna of a plurality of antennas (for example, each antenna of an antenna chain of the parallel scanning apparatus 200), and/or the like. It will be appreciated that, in some embodiments, each sub-core associated with a particular wireless scanning chain is configured based at least in part on determinable parameter values, and need not share the same parameters.

At operation 706, the parallel scanning apparatus 200 includes means to determine whether a scheduled trigger has been reached. In some embodiments, a scheduled trigger is reached upon detection by the parallel scanning apparatus 200 of particular triggering condition(s). Alternatively or additionally, in some embodiments the parallel scanning apparatus 200 determines a scheduled trigger has been reached in circumstances where a particular event is detected. Alternatively or additionally, in some embodiments, the parallel scanning apparatus 200 determines a scheduled trigger has been reached in response to receiving user input embodying the scheduled trigger.

In circumstances where the scheduled trigger is not reached at operation 706, flow proceeds to operation 708. At operation 708, the parallel scanning apparatus 200 includes means to wait for the next check for a scheduled trigger. In this regard, in some embodiments the parallel scanning apparatus 200 polls and/or otherwise checks to determine whether a scheduled trigger has been reached at determined time intervals, and waits for a determinable amount of time between such time intervals. In some embodiments, the parallel scanning apparatus 200 continuously checks for scheduled triggers, such that waiting is not necessary.

In circumstances where the scheduled trigger is reached at operation 706, flow proceeds to operation 710. At operation 710, the parallel scanning apparatus 200 includes means to send core configuration messages to initiate a plurality of sub-processes in parallel. In some embodiments, a primary process core of a multi-core processor, for example of the multi-core processor 300 embodying the processor 218, generates and/or transmits a core configuration message to each sub-core of the multi-core processor that is initialized corresponding to a particular wireless scanning chain. In this regard, in some embodiments the core configuration message transmitted to a sub-core causes the sub-core to begin operating a corresponding wireless scanning chain. The primary process core of the multi-core processor in some such embodiments generates and/or transmits the core configuration messages to trigger a plurality of sub-cores to perform a parallel scanning process, for example by operating each sub-core to perform a process in parallel with one or more other sub-cores.

As illustrated, the parallel scanning apparatus 200 performs a parallel scanning process including a plurality of operations performed by the various wireless scanning chains and associated sub-cores in parallel with one another. In this regard, an example parallel scanning process is defined by the parallel performance of operations defined between markers 712. For example, in some embodiments, the parallel scanning apparatus 200 performs each of the operations 714a-714n in parallel, with each branch of operations performed by a different sub-core and corresponding wireless scanning chain. As illustrated, for example, at operation 714a, the parallel scanning apparatus 200 includes means to increment iteration settings for a first sub-core corresponding to a first RFID chain (RFID chain 1). At operation 714b, the parallel scanning apparatus 200 includes means to increment iteration settings for a second sub-core corresponding to a second RFID chain (RFID chain 2). At operation 714n, the parallel scanning apparatus 200 includes means to increment iteration settings for a final sub-core corresponding to a final RFID chain (RFID chain N). It will be appreciated that, in some such embodiments, each sub-core independently increments the iteration settings for an associated wireless scanning chain in parallel with operation of the other sub-cores. Such parallel operations are performable utilizing any number of sub-cores associated with any number of wireless scanning chains. For example, with respect to the particular parallel scanning apparatus 200 in some embodiments, the first sub-core of the processor 218 performs iterations of operation 714a for controlling the wireless scanning chain 216a, the second sub-core of the processor 218 performs iterations of operation 714b for controlling the wireless scanning chain 216b, and the third sub-core of the processor 218 performs iterations of operation 716c for controlling the wireless scanning chain 216c, with each sub-core performing such sub-processes in parallel.

At operation 716, the parallel scanning apparatus 200 includes means to determine whether all iterations of the parallel process defined by the operations between the markers 712 are completed. In some embodiments, the parallel scanning apparatus 200 performs operation 716 while simultaneously performing the parallel process defined by the operations between the markers 712. In some embodiments, a primary process core of the parallel scanning apparatus 200 continuously or at set timestamp intervals communicates with each sub-core of a plurality of sub-cores to determine whether each sub-core has completed iterations of operating an wireless scanning chain corresponding to the sub-core during the parallel process defined by the operations between the markers 712.

At operation 718, the parallel scanning apparatus 200 includes means to receive scan data for each sub-process. In some embodiments, the parallel scanning apparatus 200 receives scan data via each sub-core of a multi-core processor, where each sub-core is associated with controlling and/or receiving scan data corresponding to one of the plurality of sub-processes. Additionally or alternatively, in some embodiments, a primary process core of a multi-core processor, for example embodying the processor 218, receives the scan data for each sub-process by aggregating portions of scan data received by each sub-core of the multi-core processor that controls operation of a sub-process. It will be appreciated that, in some embodiments, the primary process core aggregates scan data from a sub-core as such scan data is received via the sub-core, for example in response to transmission of such data from the sub-core and/or in response to a query transmitted from the primary process core to each sub-core.

At operation 720, the parallel scanning apparatus 200 includes means to process the scan data for each sub-process to determine a location identifier for a target data identifier. In some embodiments, the location identifier is based at least in part on an antenna that detected the target data identifier. In some embodiments, for example, the scan data includes a portion of data comprising data identifier(s) captured via an antenna, and a portion of data indicating the antenna that captured such data identifier(s). Alternatively or additionally, in some embodiments, the sub-core that receives the scan data from a particular antenna determines antenna identifier data corresponding to the antenna based on the antenna determined to be active, for example based at least in part on a current time, a time during which a sub-process was initiated, previously received data, and/or the like.

In some embodiments, the target data identifier embodies a portion of a manifest file or other database maintained by or otherwise accessible to the parallel scanning apparatus 200. Alternatively or additionally, in some embodiments, the parallel scanning apparatus 200 determines a location identifier for each detected target data identifier. In this regard, in some such embodiments the parallel scanning apparats 200 determines a location identifier for each data-tagged object within an environment based at least in part on the target data identifier corresponding to each such data-tagged object.

In some embodiments, the parallel scanning apparatus 200 iterates through all portions of the scan data to determine whether the target data identifier is present in a portion of the scan data. In some such embodiments where the parallel scanning apparatus 200 identifies the target data identifier in a portion of the scan data, the parallel scanning apparatus 200 extracts antenna identifier data associated with that portion of scan data. In some embodiments, the antenna identifier data embodies the location identifier corresponding to that target data identifier. Alternatively or additionally, in some embodiments, the parallel scanning apparatus 200 determines the location identifier for the target data identifier based at least in part on the antenna identifier data. For example, in some embodiments, the parallel scanning apparatus 200 transforms the antenna identifier data to the location identifier utilizing one or more algorithmic transformation(s), look-up table(s), and/or the like.

At optional operation 722, the parallel scanning apparatus 200 includes means to wait for a next scheduled trigger. In some embodiments, the parallel scanning apparatus 200 waits for a determinable time interval. Alternatively or additionally, in some embodiments, the parallel scanning apparatus 200 waits to detect and/or receive indication of satisfaction of one or more triggering condition(s). Alternatively or additionally still, in some embodiments, the parallel scanning apparatus 200 waits to detect and/or receive indication of a particular event representing a scheduled trigger.

At optional operation 724, the parallel scanning apparatus 200 includes means to determine whether execution has been terminated. In some embodiments, the parallel scanning apparatus 200 determines execution has been terminated in response to user input. It will be appreciated that the execution may be terminated in response to any of a myriad of data-driven trigger(s), for example detecting a system sleep event, a system shutdown event, a loss of power event, and/or the like. In some embodiments, the parallel scanning apparatus 200 determines execution has been terminated automatically. For example, in some embodiments, the parallel scanning apparatus 200 determines execution has been terminated once a particular destination is detected or indicated to have been reached (e.g., a final target travel point of a plurality of target travel points represented in delivery path data has been reached). Alternatively or additionally, in some embodiments, the parallel scanning apparatus 200 determines execution has been terminated in response to receiving a signal to power down.

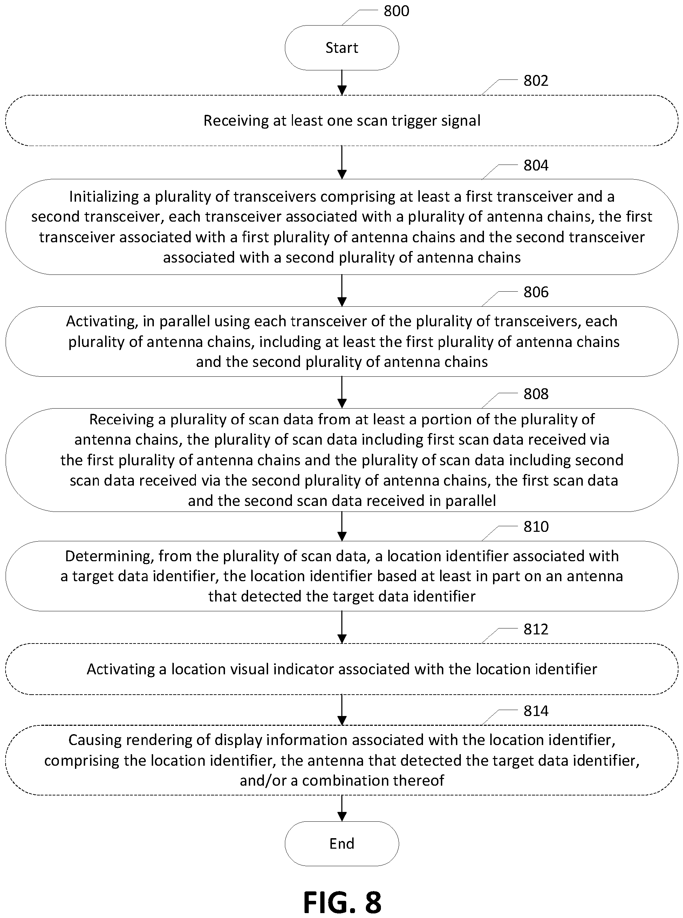

FIG. 8 illustrates a flowchart including operations of an example process for performing another parallel scanning process(es) in accordance with at least some embodiments of the present disclosure. Specifically, FIG. 8 depicts operations of an example process 800. In some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the parallel scanning apparatus 200 alone or in communication with one or more other component(s), device(s), system(s), and/or the like. In this regard, in some such embodiments, the parallel scanning apparatus 200 is specially configured by computer-coded instructions (e.g., computer program instructions) stored thereon, for example in the memory 220 and/or another component depicted and/or described herein and/or otherwise accessible to the parallel scanning apparatus 200 such as the microcontrollers 214a-c thereof, for performing the operations as depicted and described. In some embodiments, the parallel scanning apparatus 200 is in communication with one or more external apparatus(es), system(s), device(s), and/or the like, to perform one or more of the operations as depicted and described. For example, the parallel scanning apparatus 200 in some embodiments is in communication with a path management system 110 and/or data identifier management system 112. For purposes of simplifying the description, the process 800 is described as performed by and from the perspective of the parallel scanning apparatus 200.

The process 800 begins at operation 802. At optional operation 802, the parallel scanning apparatus 200 includes means to receive at least one scan trigger signal. In some embodiments, the scan trigger signal is received automatically in response to determining particular triggering condition(s) is/are met. For example, in some embodiments, the parallel scanning apparatus 200 receives the at least one scan trigger signal in response to detecting and/or otherwise receiving data indicating movement from a current position, for example a current target travel point, and/or movement to a next position, for example a next target travel point. Alternatively or additionally, in some embodiments, the parallel scanning apparatus 200 receives the least one scan trigger signal in response to user input. For example, in some such embodiments, the parallel scanning apparatus 200 receives user input to initiate a parallel scanning process upon initiating travel to a next target travel point.

At operation 804, the parallel scanning apparatus 200 includes means to initialize a plurality of transceivers, the plurality of transceivers including at least a first transceiver and a second transceiver. In some embodiments, the parallel scanning apparatus 200 includes a multi-core processor comprising a plurality of sub-cores. In some embodiments, each sub-core is communicatively coupled with a particular transceiver of a particular corresponding wireless scanning chain. In this regard, a sub-core transmits one or more signals that set parameter value(s) and/or other configuration setting(s) of the transceiver and/or other associated components of a corresponding wireless scanning chain.

In some embodiments, each transceiver is associated with a plurality of antenna chains. The plurality of antenna chains associated with each transceiver may be distinct from one another. For example, in some embodiments the first transceiver is associated with a first plurality of antenna chains activatable via the first transceiver, and the second transceiver is associated with a second plurality of antenna chains activatable via the second transceiver. In some embodiments, each transceiver is communicatively coupled with a switch, with the switch further communicatively coupled with each of antenna chain of the plurality of antenna chains corresponding to the switch. In this regard, the transceiver and/or associated control components (e.g., a microcontroller associated therewith) controls the switch to set an active antenna chain from the plurality of antenna chains.

At operation 806, the parallel scanning apparatus 200 includes means to activate, in parallel using each transceiver of the plurality of transceivers, each plurality of antenna chains. In some such embodiments, the parallel scanning apparatus 200 utilizes the sub-core of a multi-core processor, such as the processor 218, to activate each transceiver independently and in parallel. In some such embodiments, the sub-cores thus operate in parallel with one another, with each sub-core activating a particular transceiver associated therewith. In some embodiments, the association between a sub-core and a transceiver is predetermined. In other embodiments, a primary process core of the multi-core processor or any other processor communicatively coupled therewith assigns a sub-core to a particular wireless scanning chain, transceiver, and/or the like to associate that sub-core with operating such component(s).

In some embodiments, the transceiver generates a signal for activating the switch to select a particular active antenna chain from the plurality of antenna chains connected to said switch. Additionally or alternatively, in some embodiments, the transceiver transmits one or more signals for activating each antenna of an active antenna chain based at least in part on particular configuration setting(s) and/or parameter(s). For example, in some embodiments, the transceiver generates a signal that is propagated through each antenna of the active antenna chain, and activates each antenna with a particular dwell value, power level, and/or the like.

In some embodiments, the parallel scanning apparatus 200 activates at least the first plurality of antenna chains and at least the second plurality of antenna chains utilizing the transceivers associated therewith. For example, the first transceiver in some embodiments generates a signal for activating one or more antenna(s) and transmits the signal through a switch communicable therewith to the antennas of a first active antenna chain of the first plurality of antenna chains. Similarly, the second transceiver in some embodiments generates a signal for activating one or more antenna(s) and transmits the signal through a switch communicable therewith to the antennas of a second active antenna chain of the second plurality of antenna chains. In response, each transceiver receives a portion of scan data captured via the antennas of the active antenna chain corresponding to said transceiver. The portion of scan data in some example contexts represents data identifier(s) captured via each antenna of the active antenna chain in response to generated signal waves transmitted based on the signal for activating originally transmitted via the transceiver. As described herein, in some embodiments, once all antennas of an active antenna chain have been activated and scan data captured for a particular plurality of antenna chains, the transceiver and/or associated control components (e.g., a sub-core of a multi-core processor dedicated to controlling the transceiver and/or communicatively coupled components of a particular wireless scanning chain for example) controls the switch to iterate through setting all other antenna chain of the plurality of antenna chains as the active antenna chain.

In this regard, each antenna chain of the first plurality of antenna chains and the second plurality of antenna chains in some embodiments is positioned along different locations within an environment. Accordingly, the activation of each antenna in some such contexts represents a check for data identifier(s) and/or particular target data identifier(s) at various locations throughout the environment. In some embodiments, by activating each transceiver simultaneously and/or in parallel with one another, embodiments perform in reduced time to check all locations where an antenna is positioned.

At operation 808, the parallel scanning apparatus 200 includes means to receive a plurality of scan data from at least a portion of the plurality of antenna chains. In some embodiments, the plurality of scan data includes at least first scan data received via the first plurality of antenna chains, and the scan data includes at least second scan data received via the second plurality of antenna chains. In some such embodiments, the first scan data and the second scan data is received in parallel. For example, in some embodiments, the parallel scanning apparatus 200 includes the multi-core processor further including a first sub-core associated with the first plurality of antenna chains (e.g., controlling some or all components of a first wireless scanning chain including the first plurality of antenna chains) and a second sub-core associated with the second plurality of antenna chains (e.g., controlling some or all components of a second RFID chain including the second plurality of antenna chains). Each of the first and second sub-cores in some such embodiments receives at least a portion of scan data, for example the first scan data and the second scan data respectively, from at least one antenna chain (e.g., an active antenna chain) of the plurality of antenna chains associated with such sub-cores in parallel. For example, the first sub-core in some embodiments receives the first scan data via a first transceiver of a first wireless scanning chain communicatively coupled with or otherwise corresponding to the first sub-core, where the first scan data represents data identifier(s) captured by particular antennas of an active antenna chain from the first plurality of antenna chains. Similarly, in parallel, the second core receives the second scan data via a second transceiver of a second wireless scanning chain communicatively coupled with or otherwise corresponding to the second sub-core, where the second scan data represents data identifier(s) captured by particular antennas of an active antenna chain from the second plurality of antenna chains. As the active antenna chain associated with the first plurality of antenna chains and/or the active antenna chain associated with the second plurality of antenna chains is updated (e.g., by the sub-cores associated therewith and/or corresponding transceiver(s)), in some embodiments the parallel scanning apparatus 200 receives portions of additional scan data representing the data identifier(s) captured via newly activated active antenna chains. In some such embodiments, such portions of additional scan data are received in parallel, for example where each sub-core receives a particular portion of additional scan data corresponding to a newly activated active antenna chain for the plurality of antenna chains with which the sub-core is communicable. In some embodiments, this iterative process for activating new antenna chains of each plurality of antenna chains continues in parallel until each antenna chain of the plurality of antenna chains associated with each transceiver has been activated.

At operation 810, the parallel scanning apparatus 200 includes means to determine, from the plurality of scan data, a location identifier associated with a target data identifier. In some embodiments, the parallel scanning apparatus 200 receives and/or otherwise determines the target data identifier based on data received from another system indicating the target data identifier (e.g., a path management system 110 and/or data identifier management system 112). Alternatively or additionally, in some embodiments the parallel scanning apparatus 200 automatically determines the target data identifier, for example based at least in part on stored delivery path data, input from a user, and/or the like. In some embodiments, the parallel scanning apparatus 200 receives the target data identifier via user input embodying and/or otherwise representing the target data identifier. In some embodiments, the parallel scanning apparatus 200 receives a plurality of target data identifier(s), for example representing all target data identifiers associated with a particular target travel point.

In some embodiments, the location identifier is determined based at least in part on an antenna that detected the target data identifier. For example, in some embodiments, the parallel scanning apparatus 200 parses and/or otherwise process(es) the received plurality of scan data to identify a portion of scan data corresponding to the target data identifier. In some embodiments, each portion of scan data includes at least antenna identifier data that indicates the antenna that captured the portion of scan data, and data identifier(s) captured by that particular antenna. In this regard, the parallel scanning apparatus 200 in some embodiments extracts, from the plurality of scan data, a portion of scan data including or otherwise indicating the target data identifier, and determines the antenna identifier data corresponding with such portion of scan data. In some embodiments, the location identifier is embodied by the antenna identifier data. In some embodiments the antenna identifier data is converted and/or otherwise further processed to determine the location identifier, for example by determining the location identifier from a lookup table linking each antenna identifier data with a corresponding location identifier in an environment.

In some embodiments, the parallel scanning apparatus 200 utilizes a primary process core of a multi-core processor, for example embodying the processor 218, to determine the location identifier associated with the target data identifier. In some embodiments, the primary process core communicates with one or more sub-cores of the multi-core processor, for example where each sub-core is associated with a particular wireless scanning chain and stores portion(s) of scan data captured and/or otherwise received via antennas of a plurality of antenna chains of the particular wireless scanning chain. In one example context, for example, a first sub-core receives and stores the first scan data as described with respect to operation 808, and a second sub-core receives and stores the second scan data as described with respect to operation 808. In some embodiments, the primary process core communicates with each of the sub-cores to aggregate the portion(s) of scan data received from each sub-core for processing. Alternatively or additionally, in some embodiments the primary process core communicates with each of the sub-cores to iterative process the portion of scan data received by each subcore until the location identifier is detected.

At optional operation 812, the parallel scanning apparatus 200 includes means to activate a location environmental indicator associated with the location identifier. In some embodiments, the parallel scanning apparatus 200 generates a specially configured signal for activating the location environmental indicator associated with the location identifier. In some embodiments, the specially configured signal includes a data value indicating the particular location environmental indicator to be activated (e.g., a device identifier or other indicator that uniquely represents the location environmental indicator). For example, in some embodiments, the parallel scanning apparatus 200 transmits the specially configured signal to another system that controls activation of one or more location environmental indicator(s) to cause activation of the particular location environmental indicator corresponding to the location identifier. Alternatively or additionally, in some embodiments, the parallel scanning apparatus 200 directly transmits a signal to the location environmental indicator corresponding to the location identifier to cause activation of the location environmental indicator. In some embodiments, for example where the parallel scanning apparatus 200 determines one or more location identifier(s) corresponding to a plurality of target data identifiers, the parallel scanning apparatus 200 transmits one or more similarly configured signal(s) to cause activation of one or more visual indicator(s) corresponding to each of the location identifier(s) associated with the plurality of target data identifiers. For example, in some embodiments, the parallel scanning apparatus 200 generates and/or transmits a specially configured signal that identifies each location environmental indicator to be activated corresponding to the one or more location identifier(s), or transmits a signal directly to each location environmental indicator.

At optional operation 814, the parallel scanning apparatus 200 includes means to cause rendering of display information associated with the location identifier. In some embodiments, the display information comprises the location identifier, data representing the antenna that detected the target data identifier, and/or a combination thereof. In some embodiments, the parallel scanning apparatus 200 causes rendering of a user interface including interface elements comprising the display information, or otherwise includes one or more interface elements configured based at least in part on the display information. In some embodiments, for example, the parallel scanning apparatus 200 causes rendering of a user interface that visually indicates the location in the environment that correspond to the location identifier based at least in part on the display information. In some embodiments where the parallel scanning apparatus 200 determines location identifier(s) for a plurality of target data identifiers, the parallel scanning apparatus 200 causes rendering of a user interface that visually depicts the location(s) associated with each of the location identifier(s) associated with the plurality of target data identifiers.

In some embodiments, the parallel scanning apparatus 200 causes rendering of the display information by transmitting the display information to one or more device(s) associated with a display to which a user interface is to be rendered (e.g., an end-user device). In some embodiments, additionally or alternatively, the parallel scanning apparatus 200 causes rendering of the display information transmitting instructions for rendering the display information to a display communicatively coupled with or included in the parallel scanning apparatus 200.

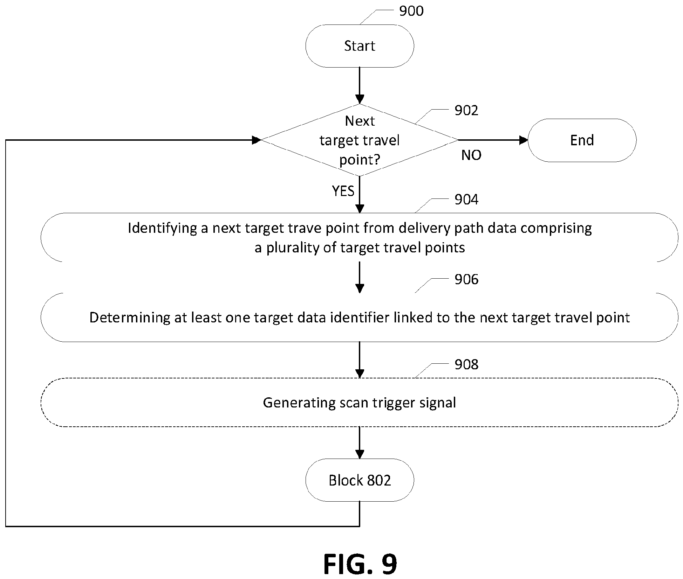

FIG. 9 illustrates a flowchart including operations of an example process for initiating a parallel scanning process in accordance with at least some embodiments of the present disclosure. Specifically, FIG. 9 depicts operations of an example process 900. In some embodiments, the process 900 is embodied by computer program code stored on a non-transitory computer-readable storage medium of a computer program product configured for execution to perform the process as depicted and described. Alternatively or additionally, in some embodiments, the process 900 is performed by one or more specially configured computing devices, such as the parallel scanning apparatus 200 alone or in communication with one or more other component(s), device(s), system(s), and/or the like. In this regard, in some such embodiments, the parallel scanning apparatus 200 is specially configured by computer-coded instructions (e.g., computer program instructions) stored thereon, for example in the memory 220 and/or another component depicted and/or described herein and/or otherwise accessible to the parallel scanning apparatus 200 such as the microcontrollers 214a-c thereof, for performing the operations as depicted and described. In some embodiments, the parallel scanning apparatus 200 is in communication with one or more external apparatus(es), system(s), device(s), and/or the like, to perform one or more of the operations as depicted and described. For example, the parallel scanning apparatus 200 in some embodiments is in communication with a path management system 110 and/or data identifier management system 112. For purposes of simplifying the description, the process 800 is described as performed by and from the perspective of the parallel scanning apparatus 200.

The process 900 begins at operation 902. In some embodiments, the process 900 begins after one or more operations depicted and/or described with respect to any one of the other processes described herein. In this regard, some or all of the process 900 may replace or supplement one or more blocks depicted and/or described with respect to any of the processes described herein. Upon completion of the process 900, the flow of operations may terminate. Additionally or alternatively, as depicted, upon completion of the process 900 in some embodiments, flow may return to one or more operation(s) of another process, for example to operation 802 of the process 800 as depicted and described with respect to FIG. 8. It will be appreciated that, in some embodiments, the process 900 embodies a sub-process of one or more other process(es) depicted and/or described herein, for example the process 800.

At operation 902, the parallel scanning apparatus 200 includes means to determine whether data indicates progression towards a next target travel point. In some embodiments, the parallel scanning apparatus 200 detects data indicating progression towards a next travel point. For example, in some embodiments the parallel scanning apparatus 200 detects data indicating movement of the parallel scanning apparatus 200 and/or an environment associated therewith, such as a delivery vehicle. Alternatively or additionally, in some embodiments, the parallel scanning apparatus 200 receives data indicating progression towards a next target travel point in response to user input. For example, in some such embodiments, a user interacts with the parallel scanning apparatus 200 to provide user input indicating progression towards a next target travel point. Alternatively or additionally, in some embodiments, the parallel scanning apparatus 200 automatically determines an indication of a next target travel point in response to detecting that one or more data-tagged object(s) were removed from an environment (e.g., unloaded from a delivery vehicle to be delivered at a current travel point). It will be appreciated that any of a myriad of other known means may be utilized to receive an indication of progression towards a next target travel point.

In circumstances where an indication of progression towards a next target travel point is not received, the flow may end. Alternatively, in some embodiments, the parallel scanning apparatus 200 continuously checks for data indicating progression towards a next target travel point until such data is detected or until data representing a request to terminate is received.

In circumstances where an indication of progression towards a next target travel point is received, flow proceeds to operation 904. At operation 902, the parallel scanning apparatus 200 includes means to identify a next target travel point. In some embodiments, the parallel scanning apparatus 200 identifies the next target travel point from delivery path data comprising a plurality of target travel points. In some such embodiments, the plurality of target travel points are arranged in a sequential order. In this regard, a first target travel point is determinable from the delivery path data, where the first target travel point is preceded by no other target travel points. Subsequently, each next target travel point is determinable sequentially as associated with the target travel point immediately before it.

In some embodiments, the parallel scanning apparatus 200 maintains the delivery path data for one or more delivery path(s). In some such embodiments, the parallel scanning apparatus 200 retrieves the delivery path data for a particular delivery path from one or more data repositories maintained by the parallel scanning apparatus 200. Alternatively or additionally, in some embodiments, the parallel scanning apparatus 200 receives the delivery path data from one or more associated systems, for example a path management system 110.

At operation 904, the parallel scanning apparatus 200 includes means to determine at least one target data identifier linked to the next target travel point. In some embodiments, the parallel scanning apparatus 200 queries one or more data repositories based at least in part on data representing the next target travel point. In some embodiments, the parallel scanning apparatus 200 queries one or more data repositories maintained by the parallel scanning apparatus 200 and/or a separate system, for example a data identifier management system 112, based at least in part on the data representing the target data identifier(s). In some such embodiments, the parallel scanning apparatus 200 receives response data comprising one or more target data identifier(s) linked to data representing the next target travel point. Alternatively or additionally, in some embodiments, the parallel scanning apparatus 200 receives the at least one target data identifier linked to the next target travel point in response to user input.

In some embodiments, the parallel scanning apparatus 200 retrieves and/or stores a data set including one or more data identifier(s) linked to each particular target travel point represented in a plurality of target travel points associated with delivery path data. For example, in some embodiments the parallel scanning apparatus 200 queries for and/or otherwise receives such a data set upon initiation and/or configuration of the parallel scanning apparatus 200 associated with the delivery path data, and stores the received data set locally. In some such embodiments, the parallel scanning apparatus 200 determines the at least one target data identifier linked to the next target travel point from the locally-stored data set at a later time, for example as data indicating progression towards each next target travel point is received.

At optional operation 908, the parallel scanning apparatus 200 includes means to generate a scan trigger signal. In some embodiments, the scan trigger signal initiates one or more process(es) to configure component(s) of the parallel scanning apparatus 200 for performing a parallel scanning process. In some embodiments, a processor of the parallel scanning apparatus 200, for example the processor 218, generates the scan trigger signal to initiate such configuration process(es). Alternatively or additionally, in some embodiments, a primary process core of a multi-core processor, for example embodying the processor 218, generates the scan trigger signal. In some embodiments, upon completion of the operation 908, the flow proceeds to block 802 of the process 800 as depicted and described with respect to FIG. 8.

In some embodiments, the process depicted in FIG. 9 is repeated for a particular number of times. For example, in some embodiments, the process is repeated for each target travel point represented in particular delivery path data representing a particular path. In this regard, in some such embodiments the determined at least one target data identifier linked to the next target travel point is utilized as the particular target data identifiers to be identified via a parallel scanning process described herein, for example via the operations of FIG. 8. Further, at each next target travel point, it will be appreciated that the determined at least one the target data identifier differs, such that the target data identifier(s) particularly linked to the next target travel point is/are identified and processed (e.g., to indicate the locations associated therewith) as described herein. In an example context of a delivery environment (e.g., a delivery vehicle delivering data-tagged objects at various stops along a delivery path, each stop embodying a target travel point of delivery path data embodying the delivery path), the at least one target data identifier linked to a next target travel point corresponds to each data-tagged object to be delivered at the next target travel point. In this regard, the target data identifier(s) may be updated to represent the data-tagged object(s) to be delivered at a particular next delivery stop represented by the next target travel point, for example while the delivery vehicle travels towards the next target travel point. Additionally or alternatively, in such an example context, location identifier(s) associated with the target data identifier(s) for the next target travel point is/are determined to visually indicate corresponding location(s) associated with each target data identifier within the environment.

### CONCLUSION

In some embodiments, some of the operations above may be modified or further amplified. Furthermore, in some embodiments, additional optional operations may be included. Modifications, amplifications, or additions to the operations above may be performed in any order and in any combination.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
initiating a first transceiver associated with a first plurality of antenna chains;
activating, utilizing the first transceiver, the first plurality of antenna chains;
initiating a second transceiver associated with a second plurality of antenna chains;
activating, utilizing the second transceiver, the second plurality of antenna chains;
in parallel receiving a plurality of scan data comprising:
first scan data associated with a first plurality of locations, the first scan data received via the first plurality of antenna chains; and
second scan data associated with a second plurality of locations, the second scan data received via the second plurality of antenna chains; and
determining, from the plurality of scan data, a location identifier associated with a target data identifier, the location identifier based at least in part on an antenna that detected the target data identifier.

2. The computer-implemented method of claim 1, the computer-implemented method further comprising:
activating a location environmental indicator associated with the location identifier where the target data identifier is located.

3. The computer-implemented method of any one of claims 1-2, wherein the computer-implemented method comprises receiving the first scan data at a first core of a multi-core processor and receiving the second scan data at a second core of the multi-core processor, and the computer-implemented method further comprising:
determining, utilizing the first core, whether the first scan data includes the target data identifier; and
determining, utilizing the second core, whether the second scan data includes the target data identifier.

4. The computer-implemented method of any one of claims 1-3, wherein the location identifier is determined from a sub-portion of the plurality of scan data, the sub-portion corresponding to a particular antenna of the first plurality of antenna chains or the second plurality of antenna chains, wherein the location identifier corresponds to a location of the particular antenna.

5. The computer-implemented method of any one of claims 1-4, the computer-implemented method further comprising:
initiating at least one additional transceiver, each additional transceiver associated with an additional plurality of antenna chains; and
activating the additional plurality of antenna chains,
wherein the plurality of scan data further comprises additional scan data associated with at least one additional plurality of locations, the additional scan data received via the additional plurality of antenna chains.

6. The computer-implemented method of any one of claims 1-5, wherein activating, utilizing the first transceiver, the first plurality of antenna chains comprises:
activating, utilizing the first transceiver, a first antenna chain of the first plurality of antenna chains, the first antenna chain activated based at least in part on a sequence of nonoverlapping Frequency channels.

7. The computer-implemented method of any one of claims 1-6, activating, utilizing the first transceiver, the first plurality of antenna chains comprises:
activating, utilizing the first transceiver, a first antenna chain of the first plurality of antenna chains, the first antenna chain activated based at least in part on a plurality of distinct reference clocks.

8. The computer-implemented method of any one of claims 1-7, wherein each antenna chain comprises a plurality of antennas, each antenna corresponding to a different location identifiers associated with a sub-portion of an environment.

9. The computer-implemented method of any one of claims 1-8, the computer-implemented method further comprising:
receiving a scan trigger signal,
wherein the first transceiver and the second transceiver are initiated in response to receiving the scan trigger signal.

10. The computer-implemented method of any one of claims 1-9, the computer-implemented method further comprising:
identifying a next target travel point from delivery path data comprising a plurality of target travel points; and
determining at least one target data identifier linked to the next target travel point, the at least one target data identifier comprising the target data identifier.

11. The computer-implemented method of any one of claims 1-10, wherein receiving the plurality of scan data is performed by a primary process core.

12. The computer-implemented method of any one of claims 1-11, wherein the first plurality of antenna chains is associated with a plurality of microprocessors comprising at least a first microprocessor associated with the first transceiver and a second microprocessor associated with the second transceiver.

13. The computer-implemented method of any one of claims 1-12, the computer-implemented method further comprising:
activating at least a first switch that controls switching between at least the first plurality of antenna chains.

14. An apparatus comprising at least one processor and at least one memory including computer program code, the at least one memory and the computer program code configured to, with the at least one processor, cause the apparatus to perform any one of the methods of claims 1-13.

15. A computer program product comprising at least one non-transitory computer-readable medium having computer-readable program instructions stored therein, the computer-readable program instructions comprising instructions, which when performed by an apparatus, are configured to cause the apparatus to at least perform any one of the methods of claims 1-13.
